(19) Europäisches Patentamt
European Patent Office
Office européen des brevets

(11) Numéro de publication: **0 273 839 B1**

(12) **FASCICULE DE BREVET EUROPEEN**

(45) Date de publication de fascicule du brevet: **24.07.91**

(51) Int. Cl.5: **C08G 73/12**, C08F 222/40

(21) Numéro de dépôt: **87420333.4**

(22) Date de dépôt: **14.12.87**

Demande divisionnaire 90104134.3 déposée le 14/12/87.

# (54) Polymères à groupements imides à partir de bis-imides et d'alkényloxyanilines.

(30) Priorité: **17.12.86 FR 8617917**

(43) Date de publication de la demande: **06.07.88 Bulletin 88/27**

(45) Mention de la délivrance du brevet: **24.07.91 Bulletin 91/30**

(84) Etats contractants désignés: **AT BE CH DE ES FR GB IT LI LU NL SE**

(56) Documents cités:
**FR-A- 2 094 607**
**FR-A- 2 462 458**

(73) Titulaire: **RHONE-POULENC CHIMIE**
**25, quai Paul Doumer**
**F-92408 Courbevoie Cédex(FR)**

(72) Inventeur: **Barthelemy, Pascal**
**21, rue de la Part-Dieu**
**F-69003 Lyon(FR)**

(74) Mandataire: **Trolliet, Maurice et al**
**RHONE-POULENC INTERSERVICES Service Brevets Chimie Centre de Recherches des Carrières B.P. 62**
**F-69192 Saint-Fons Cédex(FR)**

**EP 0 273 839 B1**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

## Description

Dans la demande française 85/16971 déposée par la demanderesse le 13 novembre 1985, on a décrit et revendiqué des polymères à groupements imides qui sont obtenus par réaction entre :

(a) un N,N'-bis-imide ou une association de plusieurs bis-imides de formule :

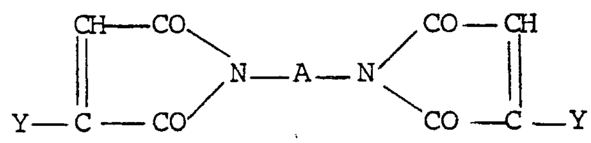

(I)

dans laquelle :

. le symbole Y représente H, $CH_3$ ou Cl

. le symbole A représente un radical divalent choisi dans le groupe constitué par les radicaux : cyclohexylènes ; phénylènes ; méthyl-4 phénylène-1,3 ; méthyl-2 phénylène-1,3 ; méthyl-5 phénylène-1,3 ; diéthyl-2,5 méthyl-3 phénylène-1,4 ; et les radicaux de formule :

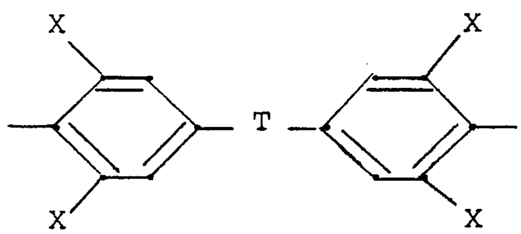

dans laquelle T représente un lien valentiel simple ou un groupement :

$-CH_2-$ ; 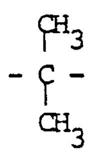 ; - O - ; 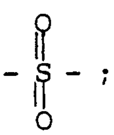 ; 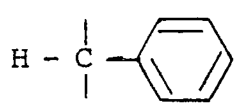 ; 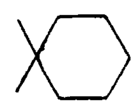 ;

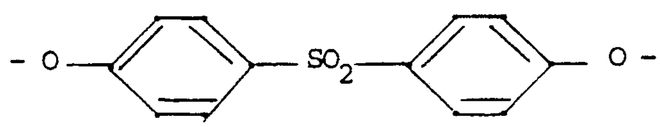

et X représente un atome d'hydrogène, un radical méthyle, éthyle ou isopropyle ;

(b) une ou plusieurs alkényloxyanilines de formule :

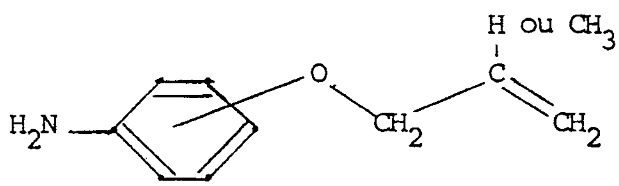

(II)

dans laquelle le radical allyloxy ou méthallyloxy est en position ortho, méta ou para par rapport à l'atome de carbone du cycle benzénique relié à l'azote,

et éventuellement (c) un ou plusieurs autres monomères copolymérisables de formule :

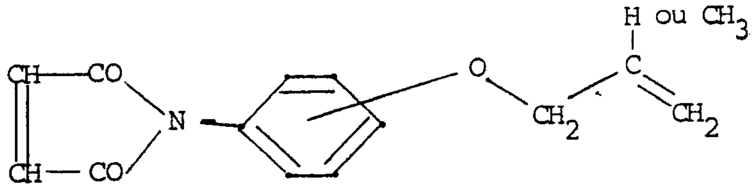

(III)

dans laquelle le radical allyloxy ou méthallyloxy est en position ortho, méta ou para par rapport à l'atome de carbone du cycle benzénique relié à l'azote.

Un des avantages lié à la mise en oeuvre de l'invention conforme à la demande française précitée réside dans le fait qu'elle permet d'obtenir des résines durcies ayant des propriétés d'usage tout aussi excellentes que celles des poly(aminobismaléimides) selon le brevet français n° 1.555.564 actuellement disponibles dans le commerce, sans avoir à prendre en cours de préparation et de transformation des précautions sur le plan de l'hygiène. Cet inconvénient peut se rencontrer en effet avec les poly-(aminobismaléimides) de l'art antérieur lorsque la diamine biprimaire utilisée est de nature aromatique du fait de la toxicité que peuvent présenter certaines d'entre elles.

On indique, dans la demande française précitée, que l'ajout à côté du bis-imide (a) et du réactif aminé-(b), du réactif facultatif (c) est une mesure qui permet d'augmenter la fluidité des prépolymères et d'améliorer la résistance à l'usure et au choc des articles moulés obtenus.

Il a maintenant été trouvé, et c'est ce qui constitue un premier objet de la présente invention, que l'on peut mettre en oeuvre, comme réactif facultatif (c) :

. à la place d'un composé choisi, comme il est indiqué dans la demande française précitée, parmi :
  - le N-(alloyloxy-2 phényl) maléimide,
  - le N-(alloyloxy-3 phényl) maléimide,
  - le N-(alloyloxy-4 phényl) maléimide,
  - le N-(méthallyloxy-2 phényl) maléimide,
  - le N-(méthallyloxy-3 phényl) maléimide,
  - le N-(méthallyloxy-4 phényl) maléimide,
  - et leurs mélanges,

. un autre composé comprenant un mélange d'un N-(méth)allyloxyphénylmaléimide avec au moins un dérivé monosubstitué sur le cycle benzénique par un radical (méth)allyle et éventuellement un ou plusieurs dérivés disubstitués sur le cycle benzénique par des radicaux (méth)allyles.

Plus spécifiquement, la présente invention concerne dans son premier objet des polymères à groupements imides obtenus par réaction entre :

(a) un N,N'-bis-imide ou une association de plusieurs bis-imides répondant d'une part à la formule (I) donnée ci-avant et d'autre part aux définitions données également ci-avant à propos de cette formule ;

(b) une ou plusieurs alkényloxyanilines répondant d'une part à la formule (II) donnée ci-avant et d'autre part aux définitions données également ci-avant à propos de cette formule ; et

(c) un réactif copolymérisable;

lesdits polymères à groupements imides étant caractérisés en ce que l'on utilise comme réactif copolymérisable (c) un composé comprenant :

- un mélange d'un monomère de formule :

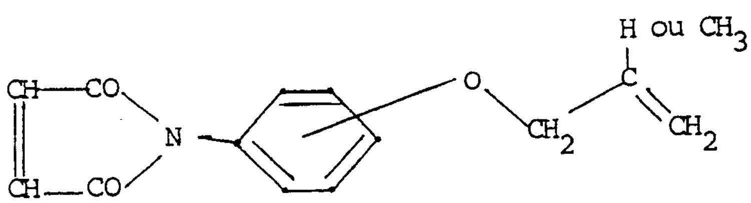

(III)

dans laquelle le radical allyloxy ou méthallyloxy est en position ortho, méta ou para par rapport à l'atome de carbone du cycle benzénique relié à l'azote.

- avec :
  . au moins un dérivé monosubstitué de formule :

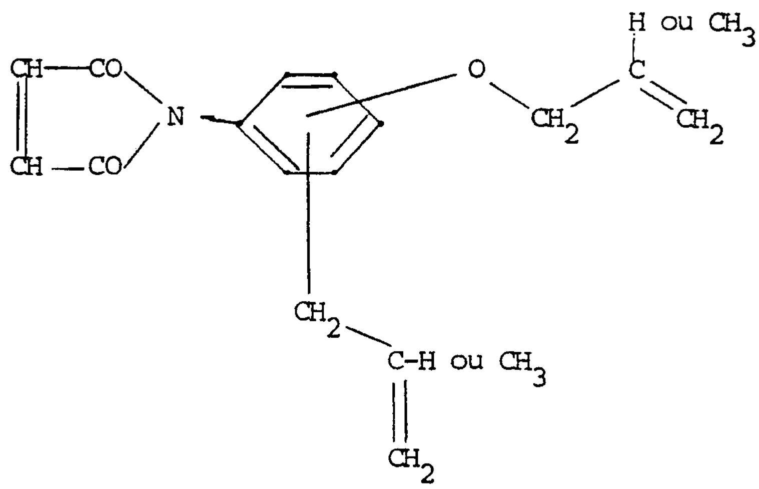

( IV)

. et éventuellement un ou plusieurs dérivés disubstitués de formule :

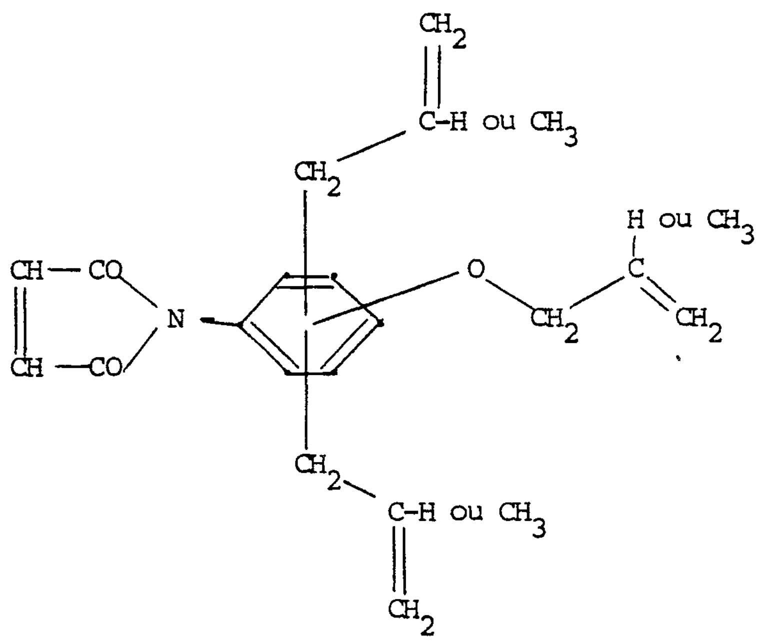

(V)

Dans le composé précité servant de réactif (c), les proportions des divers constituants du mélange des produits de formules (III), (IV) et éventuellement (V) sont choisies entre les limites suivantes (exprimant le pourcentage pondéral de chacun des constituants dans le mélange) :

- au moins 30 %, et de préférence de 50 % à 80 % de N-(méth)allyloxyphénylmaléimide de formule (III),
- de 5 % à 50 % et de préférence de 10 % à 35 % de dérivé(s) mono-(méth)allyl substitué(s) de formule (IV),
- et de 0 à 20 % et de préférence de 0 % à 15 % de dérivé(s) di-(méth)allyl substitué(s) de formule (V), la somme des constituants devant dans chaque cas être égale à 100 % en poids.

De manière avantageuse, on utilise comme composé comprenant un mélange de N-(méth)-allyloxyphénylmaléimide de formule (III) avec un ou plusieurs dérivés de substitution (méth)allylés de formule(s) (IV) et éventuellement (V), le produit brut obtenu par mise en oeuvre du procédé original ci-après défini.

Ce procédé est caractérisé en ce qu'il consiste à réaliser les 3 étapes suivantes qui sont enchaînées dans le même réacteur :

- la première étape consiste à faire réagir en milieu solvant un aminophénol avec de l'anhydride

maléique en opérant à une température allant de 20° C à 200° C, pendant une durée allant, selon la température choisie, de 30 minutes à 2 heures et elle conduit à un premier milieu réactionnel comprenant un acide N-(hyroxylphényl)maléamique ;

- la deuxième étape consiste à réaliser une réaction de (méth)allylation de l'acide précité en faisant réagir le premier milieu réactionnel précité avec un halogénure de (méth)allyle en opérant à un pH qui doit être ajusté et maintenu à une valeur constante comprise entre 7 et 14 par addition d'une quantité déterminée d'une solution aqueuse alcaline et à une température de 40° C à 150° C et elle conduit, après acidification et élimination de la phase aqueuse, à un second milieu réactionnel organique comprenant un acide N-[(méth)allyloxyphényl] maléamique, un ou plusieurs acides N-[(méth)allyloxy,-(méth)allyphényl] maléamiques et éventuellement un ou plusieurs acides N-[(méth)allyloxy,di(méth)-allylphényl]maléamiques ;
- la troisième étape consiste à réaliser une réaction de cyclisation des acides maléamiques précités en faisant réagir le second milieu réactionnel précité avec un anhydride d'acide carboxylique inférieur, en présence d'une amine tertiaire et éventuellement d'un catalyseur, puis à éliminer le solvant de la réaction et elle conduit à un produit brut de réaction qui est un composé comprenant un mélange formé de : au moins 30 % en poids et de préférence de 50 % à 80 % en poids de N-(méth)-allyloxyphénylmaléimide, de 5 % à 50 % en poids et de préférence de 10 % à 35 % en poids d'un ou plusieurs N-[(méthallyloxy,(méth)allylphényl]maléimides et de 0 % à 20 % en poids et de préférence de 0 % à 15 % en poids d'un ou plusieurs N-[(méth)allyloxy,di(méth)allylphényl]-maléimides.

Les 3 étapes qui viennent d'être décrites sont enchaînées dans un solvant unique pour une plus grande simplicité du procédé, mais il est possible d'opérer un changement de solvant, au cours de telle ou telle étape, sans inconvénient. le choix du solvant peut être très large, mais, comme la deuxième étape est réaliseé en milieu biphasique hydro-organique, il peut être souhaitable de mettre en oeuvre un solvant organique non miscible à l'eau, ce qui simplifie considérablement le traitement de la masse réactionnelle. Parmi les solvants miscibles ou non miscibles à l'eau utilisables, on donnera en fait la préférence à ceux qui dissolvent, dans les conditions de température adoptées pour la synthèse, l'aminophénol de départ. Parmi ces solvants, on peut citer par exemple : les alcools (comme par exemple : méthanol, éthanol, butanol) ; les cétones (comme par exemple ; acétone, méthyléthylcétone, méthylisobutylcétone) ; les nitriles (comme par exemple : benzonitrile, propionitrile, acétonitrile) ; les esters (comme par exemple : acétate d'éthyle, de butyle) ; des solvants aromatiques (comme par exemple : anisole, chlorobenzène) ; des hydrocarbures halogènés (comme par exemple : chloroforme, dichlorométhane, dichloroéthane).

S'agissant de la première étape du procédé, on peut dire que la concentration des réactifs de départ dans le solvant utilisé n'est pas critique. On n'a pas intérêt tout de même ni à trop diluer pour des raisons de productivité, ni à trop concentrer pour avoir une bonne agitabilité. Dans cette première étape l'anhydride maléique est utilisé en quantités au moins égales à une mole par mole d'aminophénol ; on utilise de préférence des quantités plus importantes qui vont de 1,01 à 1,5 moles par mole d'aminophénol. De plus la température se situe de préférence entre 40° C et 60° C.

S'agissant de la deuxième étape, on commence par ajouter dans le milieu réactionnel la quantité d'une solution aqueuse alcaline, par exemple d'une solution aqueuse de NaOH, nécessaire d'une part pour salifier l'acide N-(hydroxyphényl) maléamique et d'autre part pour obtenir le pH désiré. Le pH sera maintenu constant pendant toute la réaction par ajout de soude ; de manière préférentielle, le pH est ajusté et maintenu à une valeur constante comprise entre 10 et 12. La réaction d'allylation est réalisée de préférence avec le bromure ou le chlorure de (méth)allyle. La quantité d'halogénure de (méth)allyle va de 1,5 à 10 moles par groupement molaire OH phénolique et, de préférence, de 2 à 4 . L'excès de ce réactif peut être récupéré en fin d'opération et recyclé dans une opération suivante. Le temps de coulée de l'halogénure de (méth)allyle n'est pas critique et il peut se situer dans l'intervalle allant de 1 heure à 5 heures, et, de préférence, allant de 2 heures à 4 heures. Dans cette deuxième étape, la température se situe de préférence entre 60° C et 100° C. A noter qu'en fin d'étape la phase aqueuse est acidifiée jusqu'à un pH environ égal à 1 par des acides habituels, de préférence des oxyacides ou des hydracides minéraux. La couche aqueuse est éliminée et on laisse dans le réacteur la couche organique.

S'agissant de la troisième étape du procédé, on utilise, avantageusement comme anhydride d'acide carboxylique inférieur, l'anhydride acétique en quantités au moins égales à une mole par groupement molaire HOOC-CH=CH-CO-NH- à cycliser. On utilise de préférence des quantités plus importantes qui vont de 1,05 à 1,5 moles par groupement maléamique.

Parmi les amines tertiaires convenables, on peut citer notamment les trialkylamines ainsi que les N,N-dialkylanilines dans lesquelles les radicaux alkyle ont de 1 à 12 atomes de carbone. La triéthylamine et la N,N-diméthyl-aniline sont d'un emploi avantageux. Les quantités d'amine tertiaire se situent entre 0,05 et 2

moles par groupement molaire HOOC-CH = CH-CO-NH-.

En tant que catalyseurs, on peut utiliser par exemple des sels de nickel d'acides carboxyliques, éventuellement hydratés ainsi que les formes chélatées de ce métal. L'acétate et l'acétylacétonate conviennent particulièrement bien. Ces catalyseurs sont employés en quantités très faibles allant de 0,05 à 1,5 g par groupement molaire HOOC-CH = CH-CO-NH- et, de préférence, allant de 0,1 à 0,8 g.

Dans cette troisième étape, la température n'est pas critique et n'a une incidence que sur la cinétique de la réaction. Cette température peut être comprise par exemple entre 40° C et 150° C et, de préférence, entre 60° C et 80° C. En fin de cette étape, le solvant est éliminé par distillation sous vide et on obtient le produit brut de réaction ayant l'aspect d'une huile.

Conformément à une modalité très préférée de mise en oeuvre de la présente invention, le procédé précité s'applique bien, au départ de métaaminophénol, à la préparation des composés comprenant des mélanges à base de :

N-[(méth)allyloxy-3 phényl]maléimide + N-[(méth)allyloxy-3 (méth)allyl-4 phényl]maléimide + N-[(méth)-allyloxy-3 (méth)allyl-6 phényl]maléimide + éventuellement N-[(méth)allyloxy-3 di(méth)allyl-4,6 phényl]-maléimide.

A noter qu'au départ d'orthoaminophénol, on est conduit à des composés comprenant des mélanges à base de :

N[(méth)allyloxy-2 phényl]maléimide + N-[(méth)allyloxy-2 (méth)allyl-3 phényl]maléimide + N-[(méth)-allyloxy-2 (méth)allyl-5 phényl]maléimide + éventuellement N-[(méth)allyloxy-2 di(méth)allyl -3,5 phényl]-maléimide. A noter encore qu'au départ de paraminophénol, on est conduit à des composés comprenant des mélanges à base de :

N-[(méth)allyloxy-4 phényl]maléimide + N-[(méth)allyloxy-4 (méth)allyl-3 phényl]maléimide + éventuellement N-[(méth)allyloxy-4 di(méth)allyl-3,5 phényl]maléimide.

En ce qui concerne le réactif (a), on peut citer, à titre d'exemples spécifiques de bis-imides de formule (I) qui conviennent, les composés indiqués dans la demande française 85/16971, c'est à dire :

- le N,N'-métaphénylène-bis-maléimide,
- le N,N'-paraphénylène-bis-maléimide,
- le N,N'-4,4'-diphénylméthane-bis-maléimide,
- le N,N'-4,4'-diphényléther-bis-maléimide,
- le N,N'-4,4'-diphénylsulphone-bis-maléimide,
- le N,N'-cyclohexylène-1,4-bis-maléimide,
- le N,N'-4,4'-diphényl-1,1 cyclohexane-bis-maléimide,
- le N,N'-4,4'-diphényl-2,2 propane-bis-maléimide,
- le N,N'-4,4'-triphénylméthane-bis-maléimide,
- le N,N'-méthyl-2 phénylène-1,3-bis-maléimide,
- le N,N'-méthyl-4 phénylène-1,3-bis-maléimide,
- le N,N'-méthyl-5 phénylène-1,3-bis-maléimide,

Ces bis-maléimides peuvent être préparés selon les procédés décrits dans le brevet américain n° 3 018 290 et le brevet anglais n° 1 137 290. On utilise de préférence, pour la mise en oeuvre de la présente invention, le N,N'-4,4'-diphénylméthane-bis-maléimide pris seul ou en mélange avec le N,N'-méthyl-2 phénylène-1,3-bis-maléimide, le N,N'-méthyl-4 phénylène-1,3-bis-maléimide, le N,N'-méthyl-5 phénylène-1,3-bis-maléimide.

En ce qui concerne le réactif aminé (b), il est choisi comme indiqué dans la demande française précitée parmi :

- l'allyloxy-2 aniline,
- l'allyloxy-3 aniline,
- l'allyloxy-4 aniline,
- le méthallyloxy-2 aniline,
- le méthallyloxy-3 aniline,
- le méthallyloxy-4 aniline,
- et leurs mélanges.

Ces composés peuvent être préparés selon les procédés décrits dans les références suivantes : Journal of American Chemical Society, 70, pages 592 à 594 (1948) ; Chemical Abstracts, 51, 4423 C (1957) ; Journal of American Chemical Society, 44, pages 1741 à 1744 (1922) ; Bulletin de la Société Chimique de France 1962, pages 2154 à 2157.

Les quantités de N,N'-bis-imide(s) (a), de réactifs aminé (b) et de réactif copolymérisable (c) sont choisies de façon à ce que le rapport r :

$$\frac{\text{poids total des réactifs à groupements imide (a) + réactif (c)}}{\text{poids du réactif à groupement } NH_2 \text{ (b)}}$$

se situe dans l'intervalle allant de 0,5/1 à 10/1 et, de préférence, allant de 1/1 à 5/1.

Par ailleurs, le poids de réactif copolymérisable (c) représente jusqu'à 40 % du poids total des réactifs (a) + (b) + (c) et, de préférence, se situe dans l'intervalle allant de 5 à 30 %.

Les conditions générales pour mettre en pratique la présente invention sont celles décrites dans la demande française précitée et rappelées ci-après.

Les polymères selon l'invention peuvent être préparés par chauffage direct du ou des bis-imide(s) (a), du réactif aminé (b) et du réactif (c) au moins jusqu'à l'obtention d'un mélange liquide homogène. La température peut varier en fonction de l'état physique des composés en présence mais elle se situe entre 50° C et 300° C. Il est avantageux d'amener et de maintenir les composés de départ dans un état de mélange intime avant et pendant le chauffage à l'aide par exemple d'une bonne agitation.

La préparation des polymères selon l'invention peut aussi être effectuée par chauffage du mélange des réactifs au sein d'un diluant organique qui est liquide dans une partie au moins de l'intervalle 50° C - 250° C. Parmi ces diluants, on peut mentionner en particulier des hydrocarbures aromatiques comme les xylènes et le toluène, des hydrocarbures halogénés comme les chlorobenzènes, des solvants polaires comme le dioxanne, le tétrahydrofuranne et l'oxyde de dibutyle, le diméthylformamide, le diméthylsulfoxyde, la N-méthylpyrrolidone, le diméthylacétamide, le méthylglycol et la méthyl-éthyl-cétone. Les solutions ou suspensions de polymères peuvent être utilisées telles quelles pour de nombreux emplois ; on peut également isoler les polymères, par exemple par filtration, éventuellement après précipitation au moyen d'un diluant organique miscible avec le solvant utilisé. Dans ce contexte, on peut utiliser avantageusement un hydrocarbure dont le point d'ébullition ne dépasse pas notablement 120° C.

Il doit être compris que les propriétés des polymères selon l'invention peuvent varier dans une large mesure en fonction notamment de la nature exacte des réactifs engagés, des proportions de réactifs choisies et des conditions précises de température adoptées dans l'intervalle précédemment mentionné. En ce qui concerne les polymères obtenus, ceux-ci peuvent être des polymères durcis, insolubles dans les solvants usuels tels que par exemple les composés polaires cités dans le paragraphe précédent et ne présentant pas de ramollissement notable au dessous de la température à laquelle ils commencent à se dégrader.

Mais ces polymères peuvent également se présenter sous l'aspect de prépolymères (P) solubles dans les solvants organiques polaires et présentant un point de ramollissement à une température inférieure à 200° C [en général ce point de ramollissement est compris entre 50° et 150° C]. Ces prépolymères peuvent être obtenus en masse en chauffant le mélange des réactifs jusqu'à l'obtention d'un produit homogène ou pâteux à une température située entre 50° et 180° C pendant une durée qui est d'autant plus brève que la température adoptée est plus élevée. Avant de soumettre le mélange des réactifs au chauffage, il est avantageux là aussi d'en effectuer par agitation un mélange intime préalable. La préparation des prépolymères peut également être effectuée en suspension ou en solution dans un diluant qui est liquide dans une partie au moins de l'intervalle de 50° - 180° C.

Il faut noter que les prépolymères (P) peuvent également être obtenus en formant, à partir du ou des bis-imide(s) (a) et du réactif (c), un prépolymère (PP) qui est ensuite mis à réagir avec le réactif aminé (b). On peut encore préparer au préalable un prépolymère (P'P') en chauffant le mélange de réactif aminé (b) et de réactif (c), puis en le faisant réagir avec le ou les bis-imide(s) (a) pour obtenir le prépolymère (P). Les conditions de température et de durée utilisées pour la préparation des prépolymères (PP) ou (P' P') et pour leur transformation en prépolymères (P) sont celles indiquées ci-avant à propos de la préparation des prépolymères (P) par mélange direct des réactifs (a), (b) et (c).

Les prépolymères (P) peuvent être utilisés à l'état de masse liquide, une simple coulée à chaud suffisant pour la mise en forme et la réalisation d'objets moulés. On peut aussi, après refroidissement et broyage, les utiliser sous la forme de poudres qui se prêtent remarquablement aux opérations de moulage par compression, éventuellement en présence de charges à l'état de poudres, de sphères, de granules, de fibres ou de paillettes. Sous la forme de suspensions ou de solutions, les prépolymères (P) peuvent être utilisés pour la réalisation de revêtements et d'articles intermédiaires préimprégnés dont l'armature peut être constituée par des matières fibreuses à base de silicate ou d'oxyde d'aluminium ou de zirconium, de carbone, de graphite, de bore, d'amiante ou de verre. On peut encore utiliser ces prépolymères (P) pour la réalisation de matériaux cellulaires après incorporation d'un agent porogène tel que par exemple l'azodicar-

bonamide.

Dans un second stade, les prépolymères (P) peuvent être durcis par chauffage jusqu'à des températures au plus égales à 300° C et plus précisément comprises entre 150° C et 300° C ; une mise en forme complémentaire peut être effectuée pendant le durcissement, éventuellement sous vide ou sous une pression super-atmosphérique, ces opérations pouvent également être consécutives.

On ne sort pas du cadre de l'invention si l'on prépare des polymères, qui ne sont pas sous l'aspect de prépolymères (P), en utilisant un mélange intime de prépolymère (PP) et de réactif aminé (b) ou un mélange intime de prépolymère (P'P') et de bis-imide(s) (a) que l'on chauffe en masse dans les conditions décrites précédemment.

Les polymères selon l'invention intéressent les domaines de l'industrie qui requièrent des matériaux doués de bonnes propriétés mécaniques et électriques ainsi que d'une grande inertie chimique à des températures de 200° à 300° C. A titre d'exemples, ils conviennent pour la fabrication d'isolants en plaques ou tubulaires pour transformateurs électriques, de supports de circuits imprimés, de pignons, de bagues. Les articles préimprégnés sont utilisables pour la réalisation de pièces ayant des formes et des fonctions variées dans de nombreuses industries comme par exemple dans l'aéronautique. Ces pièces, appelées stratifiés, qui peuvent être des pièces de révolution sont obtenues par placage de plusieurs couches de préimprégnés sur une forme ou un support. On peut utiliser aussi les préimprégnés comme renforts ou comme moyen de réparation de pièces détériorées. On rappellera que pour faire par exemple des objets moulés, il est possible de partir, soit du mélange des réactifs, soit d'un prépolymère (P). Quand on part directement du mélange des réactifs, on donne à ce mélange la forme de l'objet désiré et on effectue ensuite le durcissement par chauffage. Quand on part du prépolymère (P), il peut être moulé par simple coulée à chaud ou par injection et on provoque ensuite son durcissement par chauffage.

Les exemples suivants sont donnés à titre illustratif, mais non limitatif.

EXEMPLE 1

1. Exemple de mise en oeuvre de la présente invention.

Dans un réacteur en verre muni d'une tubulure latérale et d'un agitateur de type ancre, on introduit à température ambiante :

- 11, 9 g d'un composé comprenant les constituants suivants :
  N-(allyloxy-3 phényl)maléimide + N-(allyloxy-3 allyl-6 phényl)maléimide + N-(allyloxy-3 allyl-4 phényl)maléimide + N-(allyloxy-3 diallyl-4,6 phényl) maléimide ; ce composé est le produit brut de réaction préparé comme indiqué ci-après dans le point 2 ;
- 25,9 g d'allyloxy-3 aniline.

On plonge le réacteur dans un bain d'huile chauffé à 140° C. Après 1 minute d'homogénéisation, on ajoute, sous agitation, à 140° C, 62,2g de N,N'-4,4'-diphénylméthane-bis-maléimide en 2 minutes [le rapport r est égal à 2,86/1 et la quantité du composé à base de N-(allyloxy-3 phényl) maléimide représente 11,9 % du poids total des réactifs]. La masse réactionnelle devient limpide en 8 minutes. On refroidit à 130° C en 2 minutes et on laisse réagir 20 autres minutes à 130° C. On applique alors une pression réduite d'environ 130 Pa pendant 5 minutes.

On coule ensuite la masse réactionnelle dans un moule préchauffé à 150° C. On peut ainsi préparer des plaques de dimensions 140 x 100 x 4 mm qui vont subir le cycle de cuisson suivant :

. 60 minutes à 150° C
. 50 minutes entre 150° C et 200° C
. 2 heures à 200° C
. 50 minutes entre 200° C et 250° C
. 16 heures à 250° C
. et 2 heures entre 250° C et 25° C.

Après démoulage, les plaques à base de polymère durci sont découpées pour obtenir des éprouvettes de dimensions 30 x 7 x 4 mm sur lesquelles on mesure la résistance à la rupture (Rf) et le module (Mf) en flexion à 25° C et à 250° C (appareil INSTRON avec distance entre appuis de 25,4 mm) :

| | |
|---|---|
| - à 25° C : | Rf = 200 MPa |
| | Mf = 3500 Mpa |
| - à 250° C : | Rf = 96 Mpa |
| | Mf = 2250 Mpa |

Une étude de la viscosité dynamique du prépolymère obtenu au moment de la coulée à 70° C, avec un viscosimètre à mobile tournant sous un gradient de 189 $S^{-1}$ donne l'évolution suivante :

| Durée (à 70° C) | Viscosité (Pa. S) |
|---|---|
| 0 | 1,87 |
| 30 min | 1,95 |
| 1h00 | 2,05 |
| 1h30 | 2,15 |
| 2h00 | 2,22 |
| 2h30 | 2,3 |
| 3h00 | 2,4 |
| 3h30 | 2,55 |
| 4h00 | 2,62 |
| 4h30 | 2,8 |
| 5h00 | 2,95 |
| 5h30 | 3,1 |

2. description du procédé de préparation du composé comprenant un mélange à base de N-(allyloxy-3 phényl) maléimide et de ses dérivés de substitution allylés.

2.1. Première étape :

Dans un réacteur en verre muni d'une agitation centrale, d'un réfrigérant ascendant, d'une électrode de mesure de pH, d'une sonde de mesure de température et d'un système de chauffage ou de refroidissement, on charge :

- 186 g d'anhydride maléique,
- et 540 $cm^3$ de méthylisobutylcétone,

et on chauffe à 40° C.

On prépare une solution de 196 g de métaaminophénol dans 1,2 litre de méthylisobutylcétone et on coule cette solution en 1 heure : pendant ce temps, la température monte de 40° C à 60° C. Après la coulée, on laisse réagir encore à 60° C pendant 20 minutes.

On obtient à la fin de cette étape l'acide N-(hydroxy-3 phényl)maléamique. Le rendement est de 100 % par rapport à l'aminophényl de départ.

2.2. Deuxième étape :

On ajoute dans le milieu réactionnel obtenu à l'issue de la première étape 720 $cm^3$ d'eau et 240 $cm^3$ de soude aqueuse à 30 % en poids et on ajuste alors le pH du milieu à une valeur de 10,5 avec la soude aqueuse précitée. La température est amenée ensuite à 70° C et on coule 413 g de chlorure d'allyle en 4 heures. La température s'élève pendant ce temps à 80° C. Après coulée, on maintient cette température pendant encore 2 autres heures. Pendant la coulée du chlorure d'allyle, le pH a été maintenu à la valeur de 10,5 par injection de la soude aqueuse à 30 %.

En fin d'étape on amène le pH à une valeur voisine de 1 par ajout d'une solution aqueuse d'acide sulfurique à 50 % en poids, puis on élimine la phase aqueuse par décantation et on obtient une masse réactionnelle organique de 2150 g.

Le rendement, par rapport à l'acide hydroxyphénylmaléamique est de :

- 77 % en acide N-(allyloxy-3 phényl)maléamique,
- 20 % en acides N-(allyloxy-3 allyl-4 phényl) maléamique et N-(allyloxy-3 allyl-6 phényl)-maléamique,
- 3 % en acide N-(allyloxy-3 diallyl-4,6 phényl)maléamique.

2.3. Troisième étape :

Dans le milieu final de la deuxième étape, on ajoute 3,2 $cm^3$ d'une solution aqueuse à 20 % en poids d'acétate de nickel et on distille par azéotropisme 72,5 $cm^3$ d'eau restant dans la phase organique.

On charge alors 204 g d'anhydride acétique et 51 g de triéthylamine. Le mélange réactionnel est chauffé à 65° C pendant 1 heure 30 minutes, puis il est refroidi à 20° C. On ajoute ensuite 800 $cm^3$

d'eau et on amène le pH à la valeur de 7 par addition de soude aqueuse à 30 %.

On élimine la phase aqueuse et la phase organique est lavée deux fois avec 100 $cm^3$ d'eau. Le solvant de la phase organique est distillé sous pression réduite jusqu'à une valeur de $1{,}33.10^2$ Pa vers 50-60° C. On obtient ainsi 250 g d'une huile visqueuse constituant le produit brut de réaction.

Le rendement molaire global, par rapport à l'aminophénol de départ, est de :

- 40 % en N-(allyloxy-3 phényl)maléimide,
- 10 % en N-(allyloxy-3 allyl-4 phényl)maléimide et N-(allyloxy-3 allyl-6 phényl)maléimide,
- 1,5 % en N-(allyloxy-3 diallyl-4,6 phényl)maléimide.

Le produit brut de réaction est un composé comprenant un mélange formé de :

- 74,5 % en poids de N-(allyloxy-3 phényl)maléimide,
- 21,8 % en poids de N-(allyloxy-3 allyl phényl)maléimide et de N-(allyloxy-3 allyl-6 phényl)-maléimide,
- et 3,7 % en poids de N-(allyloxy-3 diallyl-4,6 phényl)maléimide.

## Revendications

### Revendications pour les Etats contractants suivants : AT, BE, CH, DE, FR, GB, IT LI, LU, NL, SE

**1.** Polymères à groupements imides obtenus par réaction entre :

(a) un N,N'-bis-imide ou une association de plusieurs bis-imides de formule :

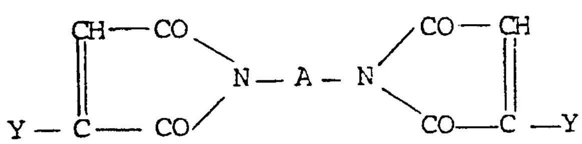

(I)

dans laquelle :

. le symbole Y représente H, $CH_3$ ou Cl

. le symbole A représente un radical divalent choisi dans le groupe constitué par les radicaux : cyclohexylènes ; phénylènes ; méthyl-4 phénylène-1,3 ; méthyl-2 phénylène-1,3 ; méthyl-5 phénylène-1,3 ; ; diéthyl-2,5 méthyl-3 phénylène-1,4 ; et les radicaux de formule :

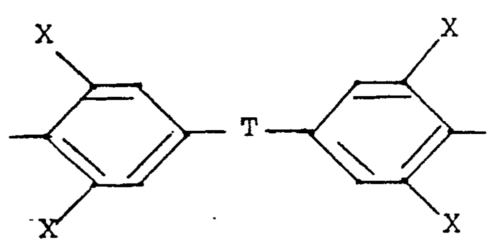

dans laquelle T représente un lien valentiel simple ou un groupement :

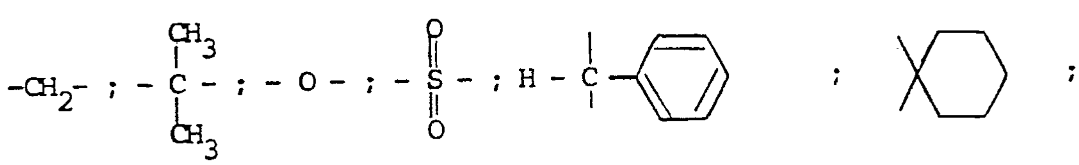

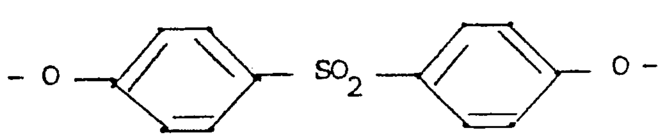

et X représente un atome d'hydrogène, un radical méthyle, éthyle ou isopropyle ;
(b) une ou plusieurs alkényloxyanilines de formule :

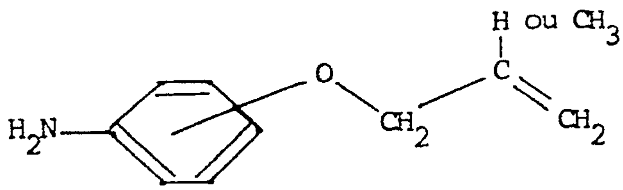

(II)

dans laquelle le radical allyloxy ou méthallyloxy est en position ortho, méta ou para par rapport à l'atome de carbone du cycle benzénique relié à l'azote ;

et (c) un réactif copolymérisable :
lesdits polymères à groupements imides étant caractérisés en ce que l'on utilise comme réactif copolymérisable (c) un composé comprenant ;

- un mélange d'un monomère de formule :

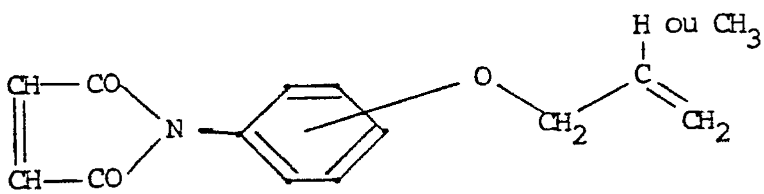

(III)

dans laquelle le radical allyloxy ou méthallyloxy est en position ortho, méta ou para par rapport à l'atome de carbone du cycle benzénique relié à l'azote.

- avec :

. au moins un dérivé monosubstitué de formule :

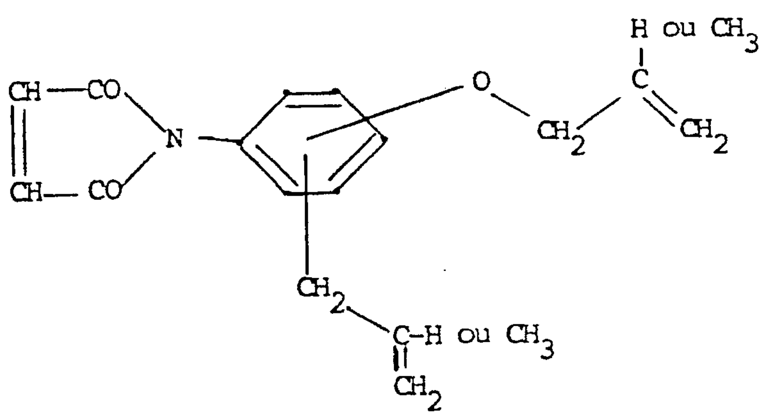

( IV)

. et éventuellement un ou plusieurs dérivés disubstitués de formule :

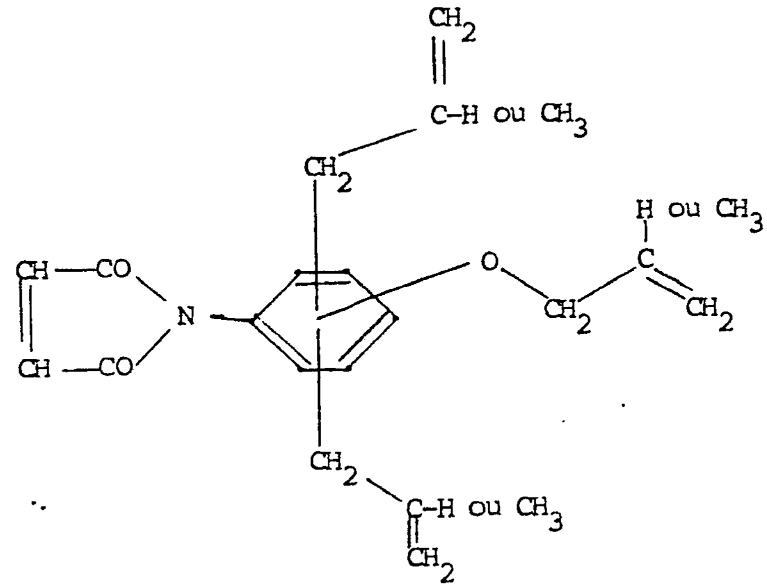

(V)

dans le composé précité servant de réactif (c), les proportions des divers constituants du mélange des produits de formule (III), (IV) et éventuellement (V)

étant choisies entre les limites suivantes (exprimant le pourcentage pondéral de chacun des constituants dans le mélange) :

- au moins 30 %, et de préférence de 50 % à 80 % de N-(méth)allyloxyphénylmaléimide de formule (III),
- de 5 % à 50 % et de préférence de 10 % à 35 % de dérivé(s) mono-(méth)allyl substitué(s) de formule (IV),
- et de 0 à 20 % et de préférence de 0 % à 15 % de dérivé(s) di-(méth)allyl substitué(s) de formule (V),

la somme des constituants devant dans chaque cas être égale à 100 % en poids,
lesdits polymères étant caractérisés de plus, en ce que d'une part les quantités de N,N'-bis-imide(s) (a), de réactif aminé (b) et de réactif copolymérisable (c), sont choisies de façon à ce que le rapport r :

$$\frac{\text{poids total des réactifs à groupements imide (a) + réactif (c)}}{\text{poids du réactif à groupement } NH_2 \text{ (b)}}$$

se situe dans l'intervalle allant de 0,5/1 à 10/1 et, de préférence, allant de 1/1 à 5/1, et d'autre part, le poids de réactif copolymérisable (c) représente jusqu'à 40 % du poids total des réactifs (a) + (b) + (c) et, de préférence, se situe dans l'intervalle allant de 5 à 30 %.

**2.** Polymères selon la revendication 1, caractérisés en ce que l'on utilise, comme composé comprenant un mélange de N-(méth)allyloxyphénylmaléimide de formule (III) avec un ou plusieurs dérivés de substitution (méth)allylés de formule (IV) et éventuellement (V), le produit brut obtenu par mise en oeuvre du procédé qui consiste à réaliser les 3 étapes suivantes qui sont enchaînées dans le même réacteur :

- la première étape consiste à faire réagir en milieu solvant un aminophénol avec de l'anhydride maléique en opérant à une température allant de 20 °C à 200 °C, pendant une durée allant, selon la température choisie, de 30 minutes à 2 heures et elle conduit à un premier milieu réactionnel comprenant un acide N-(hydroxylphényl)maléamique ;
- la deuxième étape consiste à réaliser une réaction de (méth)allylation de l'acide précité en faisant réagir le premier milieu réactionnel précité avec un halogénure de (méth)allyle en opérant à un pH qui doit être ajusté et maintenu à une valeur constante comprise entre 7 et 14 par addition d'une quantité déterminée d'une solution aqueuse alcaline et à une température allant de 40 °C à

150°C et elle conduit, après acidification et élimination de la phase aqueuse, à un second milieu réactionnel organique comprenant un acide N-[(méth)allyloxyphényl] maléamique, un ou plusieurs acides N-[(méth)allyloxy,(méth)allyphényl] maléamiques et éventuellement un ou plusieurs acides N-[(méth)allyloxy, di(méth)allylphényl]maléamiques ;

- la troisième étape consiste à réaliser une réaction de cyclisation des acides maléamiques précités en faisant réagir le second milieu réactionnel précité avec un anhydride d'acide carboxylique inférieur, en présence d'une amine tertiaire et éventuellement d'un catalyseur, puis à éliminer le solvant de la réaction et elle conduit à un produit brut de réaction qui est un composé comprenant un mélange formé par un N-(méth)allyloxyphénylmaléimide, un ou plusieurs N-[(méth)allyloxy, (méth)allylphényl]maléimide et éventuellement un ou plusieurs N-[-(méth)allyloxy, di(méth)allylphényl]maléimides.

**3.** Polymères selon l'une quelconque des revendications 1 à 2, caractérisés en ce qu'ils se trouvent sous forme de polymères durcis, insolubles dans les solvants organiques polaires consistant dans le dioxanne, le tétrahydrofuranne, l'oxyde de dibutyle, le diméthylformamide, le diméthylsulfoxyde, la N-méthylpyrrolidone, le diméthylacétamide, le méthylglycol et la méthyl-éthyl-cétone et ne présentent pas de ramollissement notable au-dessous de la température à laquelle ils commencent à se dégrader.

**4.** Polymères selon l'une quelconque des revendications 1 à 2, caractérisés en ce qu'ils se trouvent sous forme de prépolymères thermodurcissables (P) solubles dans les solvants organiques polaires définis ci-avant dans la revendication 4 et présentent un point de ramollissement à une température inférieure à 200°C.

**5.** Procédé de préparation de polymères durcis selon les revendications 1 à 3, caractérisé en ce que l'on chauffe directement le mélange des réactifs à une température comprise entre 50° et 300°C.

**6.** Procédé de préparation selon la revendication 5, caractérisé en ce qu'il consiste à chauffer le mélange des réactifs entre 50°C et 180°C pour former dans un premier temps un prépolymère (P), puis à provoquer le durcissement du prépolymère (P) par chauffage à une température comprise entre 150°C et 300°C.

**7.** Procédé de préparation de prépolymères thermodurcissables (P) selon les revendications 1 à 2 et 4, caractérisé en ce que l'on chauffe directement le mélange des réactifs à une température comprise entre 50°C et 180°C jusqu'à l'obtention d'un produit homogène liquide ou pâteux.

**8.** Procédé de préparation selon la revendication 6 ou 7, caractérisé en ce qu'il consiste à former, à partir du ou des bis-imide(s) (a) et du réactif (c), un prépolymère (PP), puis à chauffer ce prépolymère (PP) avec le réactif aminé (b) pour obtenir le prépolymère (P).

**9.** Procédé de préparation des polymères selon la revendication 6 ou 7, caractérisé en ce qu'il consiste à former, à partir du réactif aminé (b) et du réactif (c), un prépolymère (P'P'), puis à chauffer ce prépolymèe (P'P') avec le ou les bis-imide(s) (a) pour obtenir le prépolymère (P).

**10.** Application des polymères selon l'une quelconque des revendications 1 à 4 à 1a fabrication d'objets moulés, de revêtements, d'articles à structure cellulaire et de matériaux composites renforcés et imprégnés.

**Revendications pour l'Etat contractant suivant : ES**

**1.** Procédé de préparation de polymères à groupements imides se trouvant sous forme de polymères durcis, insolubles dans les solvants organiques polaires consistant dans le dioxanne, le tétrahydrofuranne, l'oxyde de dibutyle, le diméthylformamide, le diméthylsulfoxyde, la N-méthylpyrrolidone, le diméthylacétamide, le mèthylglycol et la méthyl-éthyl-cétone et ne présentant pas de ramollissement notable au-dessous de la température à laquelle ils commencent à se dégrader, caractérisé par le fait que l'on chauffe directement à une température comprise entre 50°C et 300°C le mélange des réactifs suivants :

(a) - un N,N'-bis-imide ou une association de plusieurs bis-mides de formule :

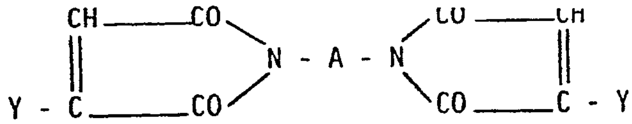

(I)

dans laquelle :

- le symbole Y représente H, $CH_3$ ou Cl,
- le symbole A représente un radical divalent choisi dans le groupe constitué par les radicaux : cyclohexylènes ; phénylènes ; méthyl-4 phénylène-1,3 ; méthyl-2 phénylène-1,3 ; méthyl-5 phénylène-1,3 ; diéthyl-2,5 méthyl-3 phénylène-1,4 ; et les radicaux de formule :

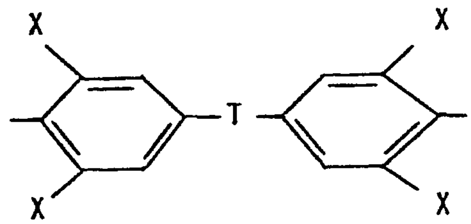

dans laquelle T représente un lien valentiel simple ou un groupement :

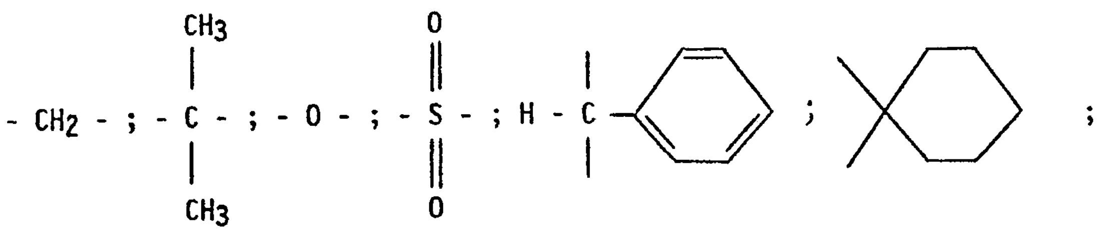

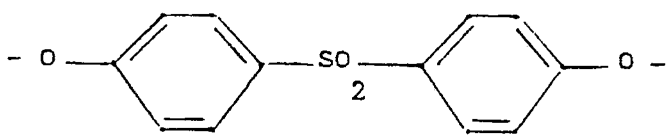

et X représente un atome d'hydrogène, un radical méthyle, éthyle ou isopropyle ;

(b) - une ou plusieurs alkényloxyanilines de formule :

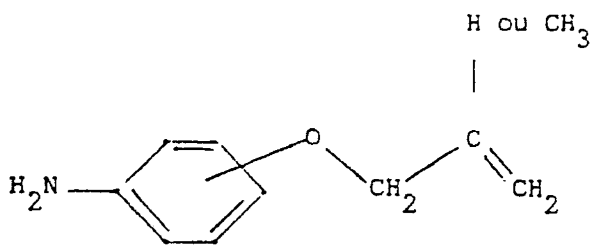

(II)

dans laquelle le radical allyloxy ou méthallyloxy est en position ortho, méta ou para par rapport à l'atome de carbone du cyle benzénique relié a l'azote ;

et (c) - un réactif copolymérisable qui est un composé comprenant :

- un mélange d'un monomère de formule :

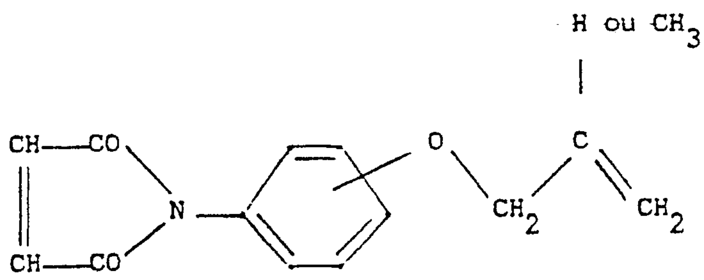

(III)

dans laquelle le radical allyloxy ou méthallyloxy est en position ortho, méta ou para par rapport à l'atome de carbone du cycle benzénique relié à l'azote.

- avec :
  . au moins un dérivé monosubstitué de formule :

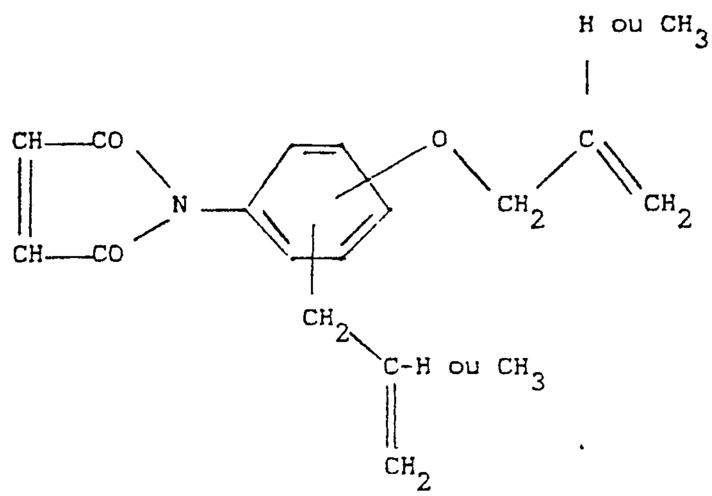

(IV)

. et éventuellement un ou plusieurs dérivés disubstitués de formule :

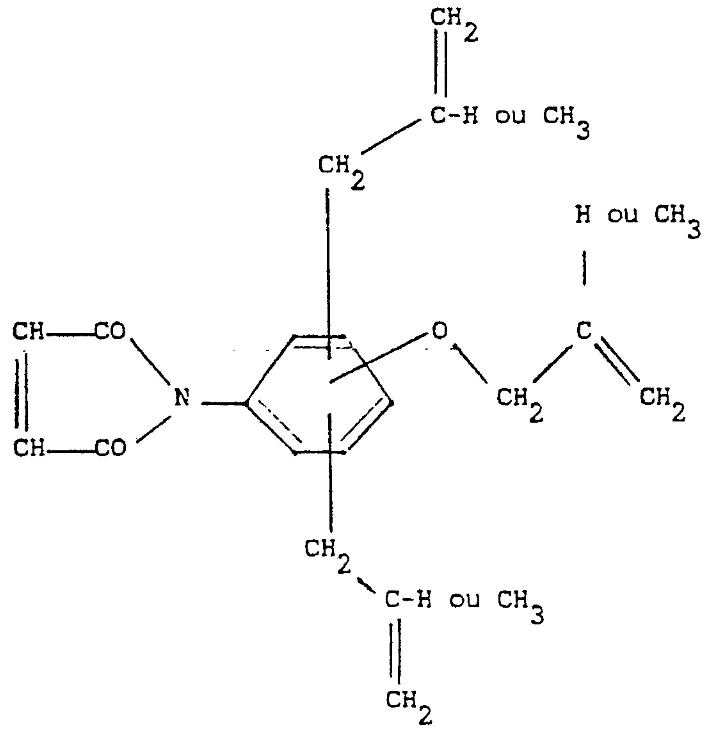

(V)

dans le composé précité servant de réactif (c), les proportions des divers constituants du mélange des produits de formule (III), (IV) et éventuellement (V)

sont choisies entre les limites suivantes (exprimant le pourcentage pondéral de chacun des constituants dans le mélange) :

- au moins 30 %, et de préférence de 50 % à 80 % de N-(méth)allyloxyphénylmaléimide de formule (III),
- de 5 % à 50 % et de préférence de 10 % à 35 % de dérivé(s) mono-(méth)allyl substitué(s) de formule (IV),
- et de 0 à 20 % et de préférence de 0 % à 15 % de dérivé(s) di-(méth)allyl substitué(s) de formule (V),

la somme des constituants devant dans chaque cas être égale à 100 % en poids,

ledit procédé étant caractérisé de plus, en ce que d'une part les quantités de N,N'-bis-imide(s) (a), de réactif aminé (b) et de réactif copolymérisable (c) sont choisies de façon à ce que le rapport r :

$$\frac{\text{poids total des réactifs à groupements imide (a) + réactif (c)}}{\text{poids du réactif à groupement } NH_2 \text{ (b)}}$$

se situe dans l'intervalle allant de 0,5/1 à 10/1 et, de préférence, allant de 1/1 à 5/1, et d'autre part, le poids de réactif copolymérisable (c)

représente jusqu'à 40 % du poids total des réactifs (a) + (b) + (c) et, de préférence, se situe dans l'intervalle allant de 5 à 30 %.

**2.** Procédé selon la revendication 1, caractérisé en ce que l'on utilise, comme composé comprenant un mélange de N-(méth)allyloxyphénylmaléimide de formule (III) avec un ou plusieurs dérivés de substitution (méth)allylés de formule (IV) et éventuellement (V), le produit brut obtenu par mise en oeuvre du procédé qui consiste à réaliser les 3 étapes suivantes qui sont enchaînées dans le même réacteur :

- la première étape consiste à faire réagir en milieu solvant un aminophénol avec de l'anhydride maléique en opérant à une température allant de 20 °C à 200 °C, pendant une durée allant, selon la température choisie, de 30 minutes à 2 heures et elle conduit à un premier milieu réactionnel comprenant un acide N-(hydroxylphényl)maléamique ;
- la deuxième étape consiste à réaliser une réaction de (méth)allylation de l'acide précité en faisant

réagir le premier milieu réactionnel précité avec un halogénure de (méth)allyle en opérant à un pH qui doit être ajusté et maintenu à une valeur constante comprise entre 7 et 14 par addition d'une quantité déterminée d'une solution aqueuse alcaline et à une température allant de 40 °C à 150 °C et elle conduit, après acidification et élimination de la phase aqueuse, à un second milieu réactionnel organique comprenant un acide N-[(méth)allyloxyphényl] maléamique, un ou plusieurs acides N-[(méth)allyloxy,(méth)allyphényl] maléamiques et éventuellement un ou plusieurs acides N-[(méth)allyloxy, di(méth)allylphényl]maléamiques ;

- la troisième étape consiste à réaliser une réaction de cyclisation des acides maléamiques précités en faisant réagir le second milieu réactionnel précité avec un anhydride d'acide carboxylique inférieur, en présence d'une amine tertiaire et éventuellement d'un catalyseur, puis à éliminer le solvant de la réaction et elle conduit à un produit brut de réaction qui est un composé comprenant un mélange formé par un N-(méth)allyloxyphénylmaléimide, un ou plusieurs N-[(méth)allyloxy, (méth)allylphényl]maléimide et éventuellement un ou plusieurs N-[-(méth)allyloxy, di(méth)allylphényl]maléimides.

**3.** Procédé de préparation de polymères à groupements imides se trouvant sous forme de prépolymères thermodurcissables (P) solubles dans les solvants organiques polaires définis ci-avant dans la revendication 1 et présentant un point de ramollissement à une température inférieure à 200 °C, caractérisé en ce que l'on chauffe directement le mélange des réactifs (a), (b) et (c) définis ci-avant dans les revendications 1 et 2 à une température comprise entre 50 °C et 180 °C jusqu'à l'obtention d'un produit homogène liquide ou pâteux.

**4.** Procédé selon la revendication 1, caractérisé en ce qu'il consiste à chauffer le mélange des réactifs entre 50 °C et 180 °C pour former dans un premier temps un prépolymère (P), puis à provoquer le durcissement du prépolymère (P) par chauffage à une température comprise entre 150 °C et 300 °C.

**5.** Procédé selon la revendication 3 ou 4, caractérisé en ce qu'il consiste à former, à partir du ou des bis-imide(s) (a) et du réactif (c), un prépolymère (PP), puis à chauffer ce prépolymère (PP) avec le réactif aminé (b) pour obtenir le prépolymère (P).

**6.** Procédé selon la revendication 3 ou 4, caractérisé en ce qu'il consiste à former, à partir du réactif aminé (b) et du réactif (c), un prépolymère (P'P'), puis à chauffer ce prépolymèe (P'P') avec le ou les bis-imide(s) (a) pour obtenir le prépolymère (P).

**7.** Application des polymères selon l'une quelconque des revendications 1 à 6 à la fabrication d'objets moulés, de revêtements, d'articles à structure cellulaire et de matériaux composites renforcés et imprégnés.

## Claims

## Claims for the following Contracting States : AT, BE, CH, DE, FR, GB, IT, LI, LU, NL, SE

**1.** Polymers containing imide groups obtained by reaction between:

(a) an N,N'-bis(imide) or a combination of several bis(imides) of formula:

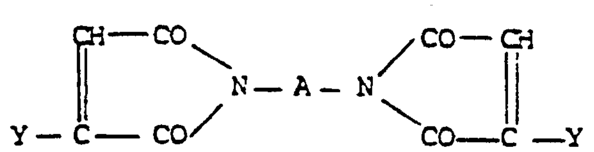

(I)

in which:

the symbol y denotes H, $CH_3$ or Cl

the symbol A denotes a divalent radical chosen from the group consisting of the following radicals: cyclohexylenes; phenylenes; 4-methyl-1,3-phenylene; 2-methyl-1,3-phenylene; 5-methyl-1,3-phenylene; 2,5-diethyl-3-methyl-1,4-phenylene; and the radicals of formula:

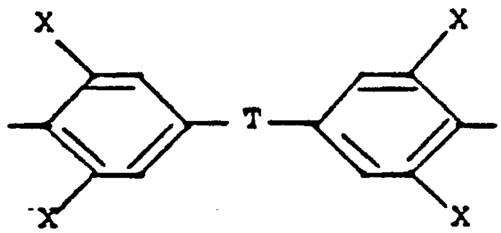

in which T denotes a single valency bond or a group:

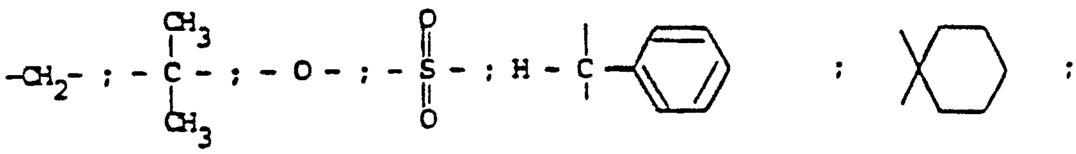

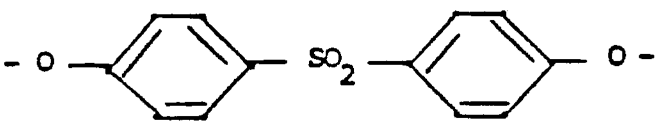

and X denotes a hydrogen atom or a methyl, ethyl or isopropyl radical;
(b) one or more alkenyloxyanilines of formula:

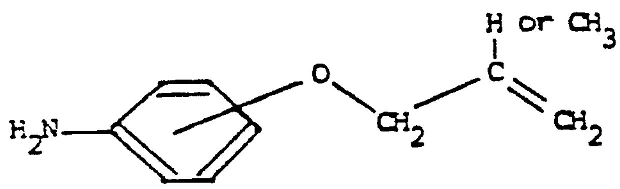 (II)

in which the allyloxy or methallyloxy radical is in the ortho, meta or para position with respect to the carbon atom of the benzene ring attached to the nitrogen;
and (c) a copolymerisable reactant:
the said polymers containing imide groups being characterised in that , as a copolymerisable reactant (c), a compound is used comprising;

- a mixture of a monomer of formula:

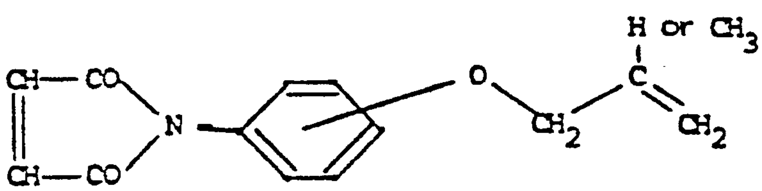 (III)

in which the allyloxy or methallyloxy radical is in the ortho, meta or para position with respect to she carbon atom of the benzene ring attached to the nitrogen.

- with:

  at least one monosubstituted derivative of formula:

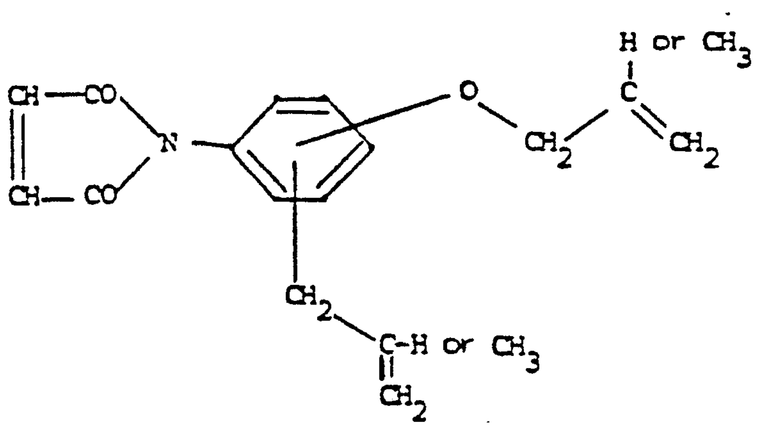

( IV)

and optionally one or more disubstituted derivatives of formula:

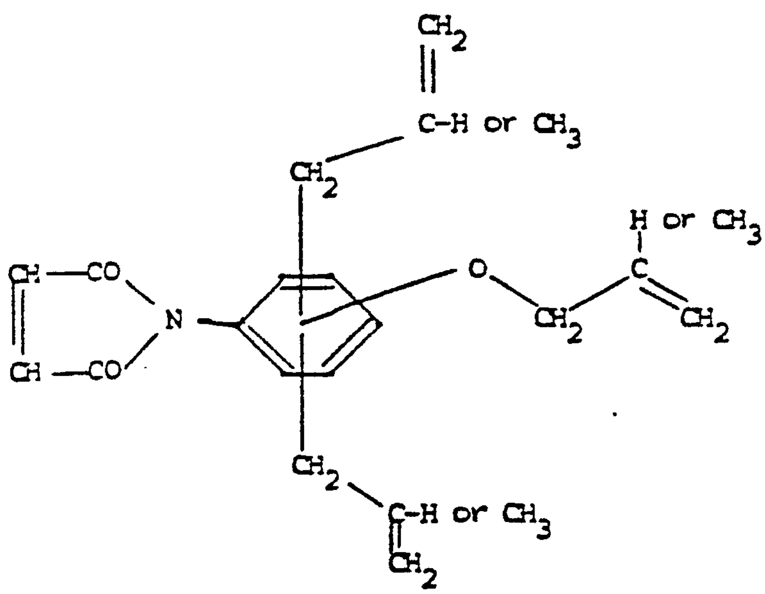

(V)

in the abovementioned compound serving as a reactant (c), the proportions of the various constituents of the mixture of the products of formula (III), (IV) and optionally (V) being chosen to be within the following limits (expressing the percentage by weight of each of the constituents in the mixture):

- at least 30%, and preferably from 50% to 80%, of N-(meth)allyloxyphenylmaleimide of formula (III),
- from 5% to 50%, and preferably from 10% to 35%, of substituted mono(meth)allyl derivative(s) of formula (IV),
- and from 0 to 20%, and preferably from 0% to 15%, of substituted di(meth)allyl derivative(s) of formula (V),

the sum of the constituents having in each case to be equal to 100% by weight,
the said polymers being further characterised in that, on the one hand, the quantities of N,N'-bis-(imide)(s) (a), amino reactant (b) and copolymerisable reactant (c) are ch

$$\frac{\text{total weight of reactants containing imide groups (a) + reactant (c)}}{\text{weight of the reactant containing } NH_2 \text{ group (b)}}$$

osen so that the ratio r: falls within the range from 0.5:1 to 10:1, and preferably within the range from

1:1 to 5:1, and on the other hand, the weight of copolymerisable reactant (c) represents up to 40% of the total weight of the reactants (a) + (b) + (c), and preferably falls within the range from 5 to 30%.

**2.** Polymers according to Claim 1 characterised in that there is used, as a compound comprising a mixture of N-(meth)allyloxyphenylmaleimide of formula (III) with one or more (meth)allyl substitution derivatives of formula (IV) and, optionally (V), the crude product obtained by carrying out the process which consists in performing the following 3 stages, which are performed in sequence in the same reactor:
- the first stage consists in reacting an aminophenol in a solvent medium with maleic anhydride, working at a temperature ranging from 20 °C to 200 °C, for a period ranging, depending on the temperature selected, from 30 minutes to 2 hours, and it leads to a first reaction medium comprising an N-(hydroxyphenyl)maleamic acid;
- the second stage consists in carrying out a (meth)allylation reaction of the abovementioned acid, by reacting the abovementioned first reaction medium with a (meth)allyl halide, working at a pH which must be adjusted and maintained at a constant value between 7 and 14 by adding a specified quantity of an alkaline aqueous solution, and at a temperature ranging from 40 °C to 150 °C, and it leads, after acidification and removal of the aqueous phase, to a second organic reaction medium comprising an N-[(meth)allyloxyphenyl]maleamic acid, one or more N-[(meth)-allyloxy,(meth)allylphenyl]maleamic acids and optionally one or more N-[(meth)allyloxy,di(meth)-allylphenyl]maleamic acids;
- the third stage consists in carrying out a cyclisation reaction of the abovementioned maleamic acids, by reacting the abovementioned second reaction medium with a lower carboxylic acid anhydride in the presence of a tertiary amine and optionally a catalyst, and then in removing the reaction solvent, and it leads to a crude reaction product which is a compound comprising a mixture composed of an N-(meth)allyloxyphenylmaleimide, one or more N-[(meth)allyloxy,(meth)-allylphenyl]maleimides and optionally one or more N-[(meth)allyloxy,di(meth)allylphenyl]-maleimides.

**3.** Polymers according to either of Claims 1 and 2, characterised in that they take the form of cured polymers which are insoluble in polar organic solvents consisting of dioxane, tetrahydrofuran, dibutyl ether, dimethylformamide, dimethyl sulphoxide, N-methylpyrrolidone, dimethylacetamide, methyl glycol and methylethylketone, and which do not show significant softening below the temperature at which they begin to decompose.

**4.** Polymers according to either of Claims 1 and 2, characterised in that they take the form of thermosetting prepolymers (P) which are soluble in the polar organic solvents defined above in Claim 3 and possess a softening point at a temperature below 200 °C.

**5.** Process for preparing cured polymers according to Claims 1 to 3, characterised in that the mixture of the reactants is heated directly to a temperature of between 50° and 300 °C.

**6.** Preparation process according to Claim 5, characterised in that it consists in heating the mixture of the reactants to between 50 °C and 180 °C to form, in a first stage, a prepolymer (P), and then to induce the curing of the prepolymer (P) by heating to a temperature of between 150 °C and 300 °C.

**7.** Process for preparing thermosetting polymers (P) according to Claims 1 to 2 and 4, characterised in that the mixture of the reactants is heated directly to a temperature of between 50 °C and 180 °C until a liquid or pasty homogeneous product is obtained.

**8.** Preparation process according to Claim 6 or 7, characterised in that it consists in forming, from the bis-(imide) (s) (a) and the reactant (c), a prepolymer (PP) and then in heating this prepolymer (PP) with the amino reactant (b) to obtain the prepolymer (P).

**9.** Process for preparing the polymers according to Claim 6 or 7, characterised in that it consists in forming, from the amino reactant (b) and the reactant (c), a prepolymer (P'P'), and then in heating this prepolymer (P'P') with the bis(imide)(s) (a) to obtain the prepolymer (P).

**10.** Application of the polymers according to any one of Claims 1 to 4 to the manufacture of moulded articles, coatings, articles having a cellular structure and reinforced and impregnated composite materials.

**Claims for the following Contracting State : ES**

**1.** Process for preparing polymers containing imide groups which take the form of cured polymers which are insoluble in polar organic solvents consisting of dioxane, tetrahydrofuran, dibutyl ether, dimethylformamide, dimethyl sulphoxide, N-methylpyrrolidone, dimethylacetamide, methyl glycol and methyl ethyl ketone, and which do not show significant softening below the temperature at which they begin to decompose, characterised in that the mixture of the following reactants is heated directly to a temperature of between 50° C and 300° C:

(a) an N,N'-bis(imide) or a combination of several bis(imides) of formula:

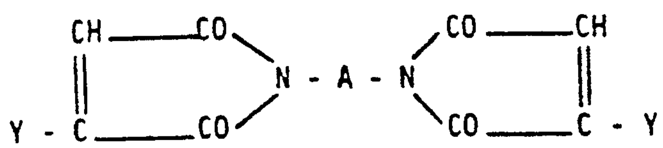

(I)

in which:

the symbol Y denotes H, $CH_3$ or Cl

the symbol A denotes a divalent radical chosen from the group consisting of the following radicals: cyclohexylenes; phenylenes; 4-methyl-1,3-phenylene; 2-methyl-1,3-phenylene; 5-methyl-1,3-phenylene; 2,5-diethyl-3-methyl-1,4-phenylene; and the radicals of formula:

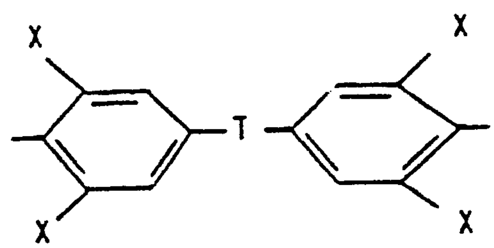

in which T denotes a single valency bond or a group:

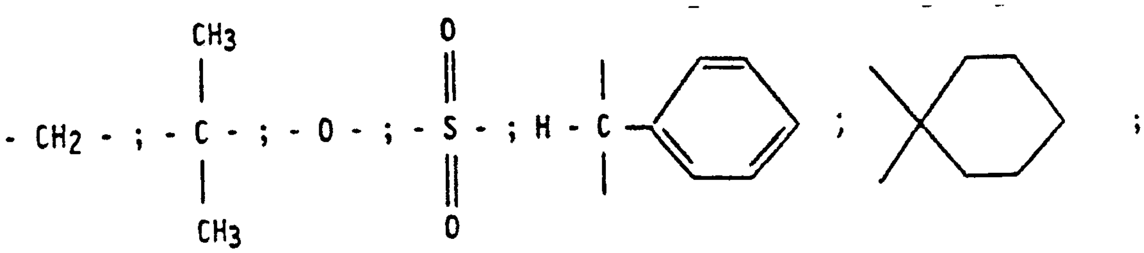

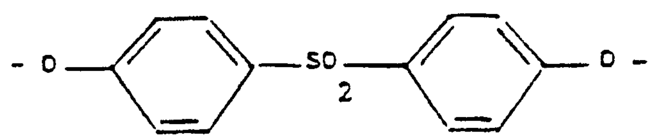

and X denotes a hydrogen atom or a methyl, ethyl or isopropyl radical;

(b) one or more alkenyloxyanilines of formula:

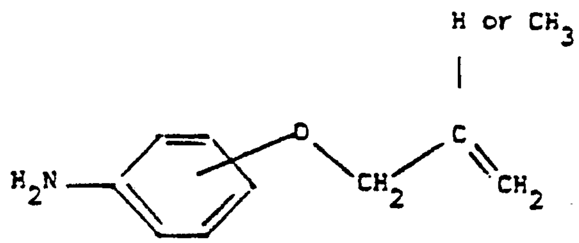

(II)

in which the allyloxy or methallyloxy radical is in the ortho, meta or para position with respect to the carbon atom of the benzene ring attached to the nitrogen;
and (c) a copolymerisable reactant which is a compound comprising:

- a mixture of a monomer of formula:

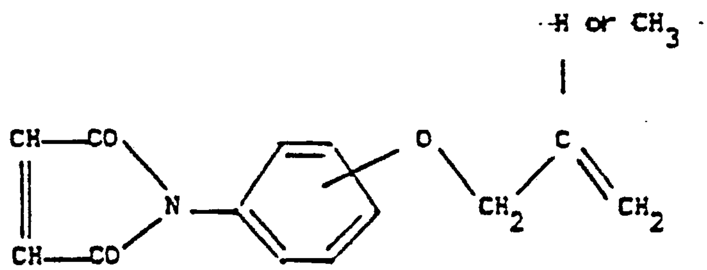

(III)

in which the allyloxy or methallyloxy radical is in the ortho, meta or para position with respect to the carbon atom of the benzene ring attached to the nitrogen.

- with:

at least one monosubstituted derivative of formula:

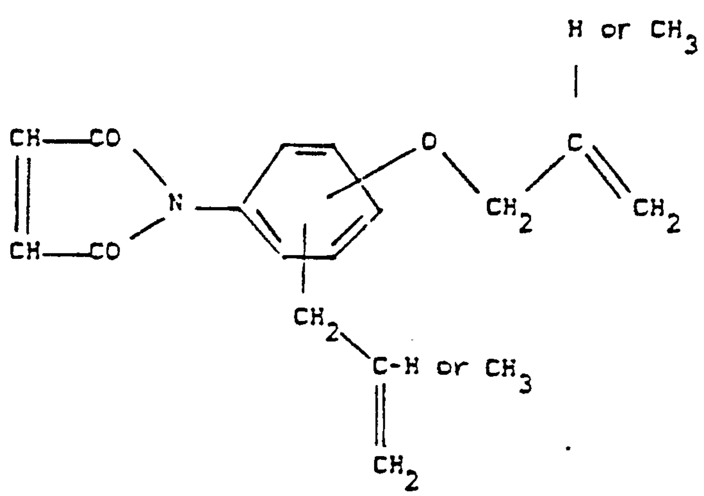

(IV)

and optionally one or more disubstituted derivatives of formula:

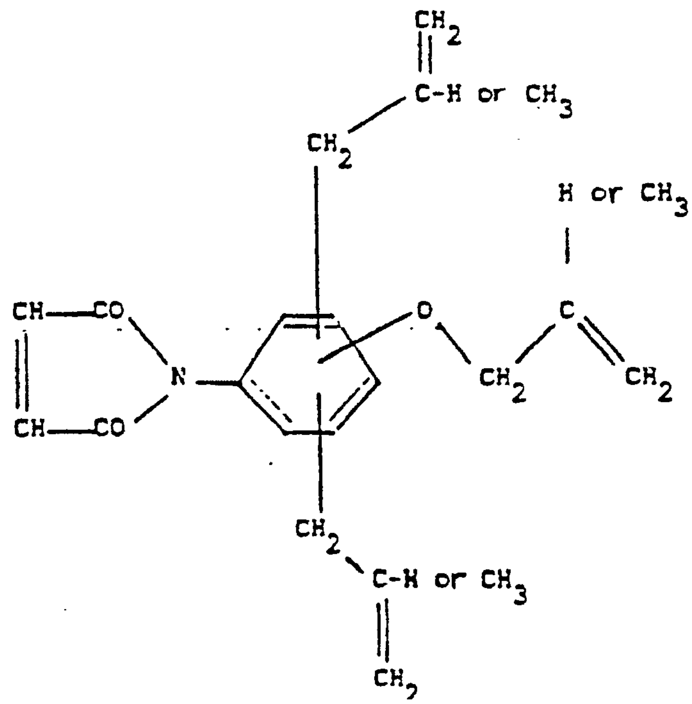

(V)

in the abovementioned compound serving as a reactant (c), the properties of the various constituents of the mixture of the products of formula (III), (IV) and optionally (V) are chosen to be within the following limits (expressing the percentage by weight of each of the constituents in the mixture):

- at least 30%, and preferably from 50% to 80%, of N-(meth)allyloxyphenylmaleimide of formula (III),
- from 5% to 50%, and preferably from 10% to 35%, of substituted mono(meth)allyl derivative(s) of formula (IV),
- and from 0 to 20%, and preferably from 0% to 15%, of substituted di(meth)allyl derivative(s) of formula (V),

the sum of the constituents having in each case to be equal to 100% by weight,
the said process being further characterised in that, on the one hand, the quantities of N,N'-bis-(imide)(s) (a), amino reactant (b) and copolymerisable reactant (c) are chosen so that the ratio r:

$$\frac{\text{total weight of reactants containing imide groups (a) + reactant (c)}}{\text{weight of the reactant containing } NH_2 \text{ group (b)}}$$

falls within the range from 0.5:1 to 10:1, and preferably within the range from 1:1 to 5:1, and on the other hand, the weight of copolymerisable reactant (c) represents up to 40% of the total weight of the reactants (a) + (b) + (c), and preferably falls within the range from 5 to 30%.

2. Process according to Claim 1, characterised in that there is used, as a compound comprising a mixture of N-(meth)allyloxyphenylmaleimide of formula (III) with one or more (meth)allyl substitution derivatives of formula (IV) and, optionally (V), the crude product obtained by carrying out the process which consists in performing the following 3 stages, which are performed in sequence in the same reactor:
   - the first stage consists in reacting an aminophenol in a solvent medium with maleic anhydride, working at a temperature ranging from 20°C to 200°C, for a period ranging, depending on the temperature selected, from 30 minutes to 2 hours, and it leads to a first reaction medium comprising an N-(hydroxyphenol)maleamic acid;
   - the second stage consists in carrying out a (meth)allylation reaction of the abovementioned acid, by reacting the abovementioned first reaction medium with a (meth)allyl halide, working at a pH which must be adjusted and maintained at a constant value between 7 and 14 by adding a

specified quantity of an alkaline aqueous solution, and at a temperature ranging from 40° C to 150° C, and it leads, after acidification and removal of the aqueous phase, to a second organic reaction medium comprising an N-[(meth)allyloxyphenyl]maleamic acid, one or more N-[(meth)-allyloxy,(meth)allylphenyl]maleamic acids and optionally one or more N-[(meth)allyloxy,di(meth)-allylphenyl]maleamic acids;

- the third stage consists in carrying out a cyclisation reaction of the abovementioned maleamic acids, by reacting the abovementioned second reaction medium with a lower carboxylic acid anhydride in the presence of a tertiary amine and optionally a catalyst, and then in removing the reaction solvent, and it leads to a crude reaction product which is a compound comprising a mixture composed of an N-(meth)allyloxyphenylmaleimide, one or more N-[(meth)allyloxy,(meth)-allylphenyl]maleimides and optionally one or more N-[(meth)allyloxy,di(meth)allylphenyl]-maleimides.

**3.** Process for preparing polymers containing imide groups which take the form of thermosetting prepolymers (P) which are soluble in the polar organic solvents defined above in Claim 1 and possess a softening point at a temperature below 200° C, characterised in that the mixture of the reactants (a), (b), and (c) defined above in Claims 1 and 2 is heated directly to a temperature of between 50° C and 180° C until a liquid or pasty homogeneous product is obtained.

**4.** Process according to Claim 1, characterised in that it consists in heating the mixture of the reactants to between 50° C and 180° C to form, in a first stage, a prepolymer (P), and then to induce the curing of the prepolymer (P) by heating to a temperature of between 150° C and 300° C.

**5.** Process according to Claim 3 or 4, characterised in that it consists in forming, from the bis(imide)(s) (a) and the reactant (c), a prepolymer (PP) and then in heating this prepolymer (PP) with the amino reactant (b) to obtain the prepolymer (P).

**6.** Process according to Claim 3 or 4, characterised in that it consists in forming, from the amino reactant (b) and the reactant (c), a prepolymer (P'P'), and then in heating this prepolymer (P'P') with the bis-(imide)(s) (a) to obtain the prepolymer (P).

**7.** Application of the polymers according to any one of Claims 1 to 6 to the manufacture of moulded articles, coatings, articles having a cellular structure and reinforced and impregnated composite materials.

**Patentansprüche**

**Patantansprüche für folgende Vertragsstaaten : AT, BE, CH, DE, FR, GB IT, LI, LU, NL, SE**

**1.** Polymere mit Imidgruppen, erhalten durch Reaktion zwischen:

(a) einem N,N'-Bis-imid oder einer Assoziation mehrerer Bis-imide der Formel

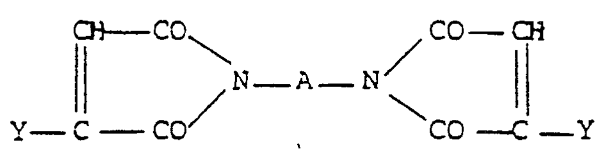

(I)

worin:

. das Symbol Y bedeutet H, $CH_3$ oder Cl

. das Symbol A bedeutet einen zweiwertigen Rest, ausgewählt aus der Gruppe, bestehend aus den Resten: Cyclohexylen; Phenylen; 4-Methyl-1,3-phenylen; 2-Methyl-1,3-phenylen; 5-Methyl-1,3-phenylen; 2,5-Diethyl-3-methyl-1,4-phenylen; und den Resten der Formel

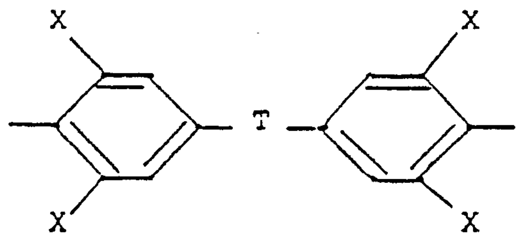

worin T eine einfache Valenzbindung oder eine Gruppe:

$-CH_2-$ ; 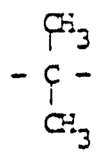 ; $-O-$ ; 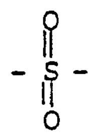 ; 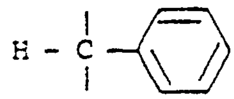 ; 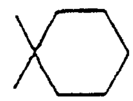 ;

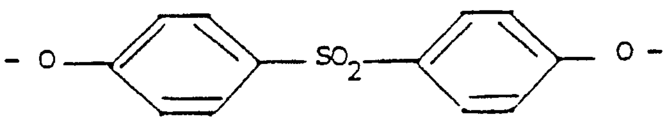

bedeutet und X ein Wasserstoffatom, einen Methyl-, Ethyl- oder Isopropylrest bedeutet;

(b) einem oder mehreren Alkenyloxyanilinen der Formel

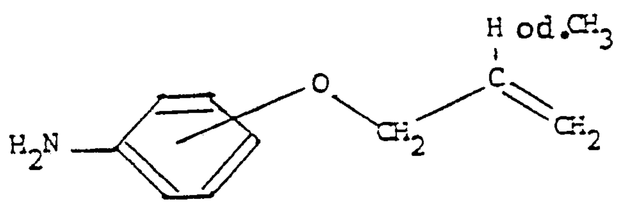

(II)

worin der Allyloxy- oder Methallyloxyrest in ortho-, meta- oder para-Stellung in bezug auf das Kohlenstoffatom des Benzolringes, das an den Stickstoff gebunden ist, steht;

und (c) einem copolymerisierbaren Reagens:

wobei diese Polymeren mit Imidgruppen dadurch gekennzeichnet sind, daß man als copolymerisierbares Reagens (c) eine Verbindung verwendet, umfassend:

- ein Gemisch eines Monomeren der Formel

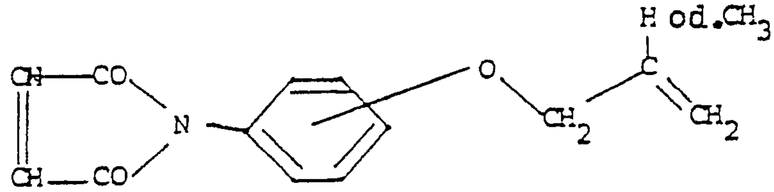

(III)

worin der Allyloxy- oder Methallyloxyrest in ortho-, meta- oder para-Stellung in bezug auf das Kohlenstoffatom des Benzolringes, das an den Stickstoff gebunden ist, steht;

- mit:
  . mindestens einem monosubstituierten Derivat der Formel

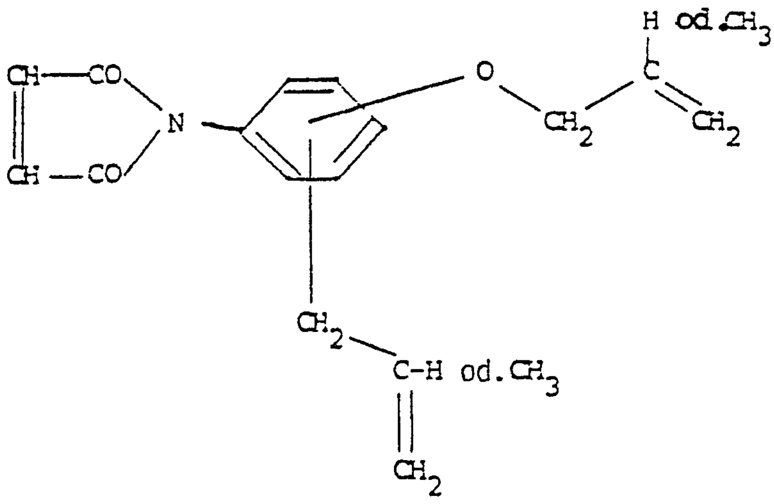

(IV)

. und gegebenenfalls einem oder mehreren disubstituierten Derivaten der Formel

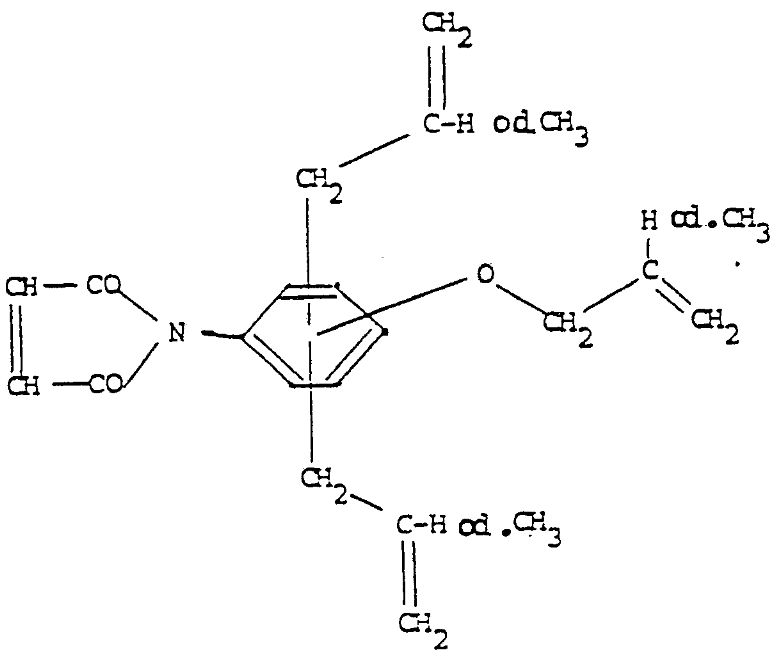

(V)

wobei in der vorerwähnten Verbindung, die als Reagens(c) dient, die Mengenverhältnisse der verschiedenen Bestandteile des Gemisches der Produkte der Formeln (III), (IV) und gegebenenfalls (V) zwischen den folgenden Grenzen ausgewählt sind (ausgedrückt in Gewichtsprozent jedes der Bestandteile in dem Gemisch):

- mindestens 30% und vorzugsweise von 50 bis 80% N-(Meth)Allyloxyphenylmaleimid der Formel (III),
- von 5 bis 50% und vorzugsweise von 10 bis 35% an substituiertem(n) Mono-(meth)allyl-Derivat(en) der Formel (IV),
- und von 0 bis 20% und vorzugsweise von 0 bis 15% an substituiertem(n) Di-(meth)allyl-Derivat(en) der Formel (V),

wobei die Summe der Bestandteile in jedem Falle gleich 100 Gew.% ist,
wobei diese Polymeren darüber hinaus dadurch gekennzeichnet sind, daß einerseits die Mengen an N,N'-Bis-imid(en) (a), Aminreagens (b) und copolymerisierbarem Reagens (c) derart ausgewählt sind, daß das Verhältnis r:

$$\frac{\text{Gesamtgewicht der Reaktanten mit Imidgruppen (a) + Reagens (c)}}{\text{Gewicht des Reagens mit } NH_2\text{-Gruppen (b)}}$$

in dem Bereich von 0,5/1 bis 10/1 Und vorzugsweise von 1/1 bis 5/1 liegt,und andererseits das Gewicht des copolymerisierbaren Reagens (c) bis zu 40% des Gesamtgewichts der Reaktanten (a) + (b) + (c) darstellt und vorzugsweise im Bereich von 5 bis 30% liegt.

2. Polymere gemäß Anspruch 1, dadurch gekennzeichnet, daß man als Verbindung, die ein Gemisch von N-(Meth)Allyloxyphenylmaleimid der Formel (III) mit einem oder mehreren (Meth)Allyl-Substitutionsderivaten der Formel (IV) und gegebenenfalls (V) umfaßt, das Rohprodukt verwendet, das durch Anwendung des Verfahrens erhalten wird, das darin besteht, die drei folgenden Stufen durchzuführen, die in dem gleichen Reaktor aneinandergereiht werden:
   - die erste Stufe besteht darin, in einem Lösungsmittelmilieu ein Aminophenol mit Maleinsäureanhydrid reagieren zu lassen, indem bei einer Temperatur von 20 bis 200°C während einer Dauer je nach der gewählten Temperatur von 30 Minuten bis 2 Stunden gearbeitet wird, und dies führt zu einem ersten Reaktionsmilieu, das eine N-(Hydroxylphenyl)-maleamidsäure umfaßt;
   - die zweite Stufe besteht darin, eine (Meth)Allylierungsreaktion der vorerwähnten Säure durchzuführen,indem man das vorerwähnte erste Reaktionsmilieu mit einem (Meth)Allylhalogenid umsetzt, wobei bei einem pH gearbeitet wird, das eingestellt wird und bei einem konstanten Wert zwischen 7 und 14 durch Zugabe einer bestimmten Menge einer wäßrigen, alkalischen Lösung und bei einer Temperatur von 40°C bis 150°C gehalten wird, und diese führt nach Ansäuern und Entfernung der wäßrigen Phase zu einem zweiten organischen Reaktionsmilieu, das eine N-[-(Meth)Allyloxyphenyl]-maleamidsäure, eine oder mehrere N-[(Meth)Allyloxy,(Meth)Allylphenyl]-maleamidsäure (n) und gegebenenfalls eine oder mehrere N-[(Meth)Allyloxy,Di-(meth)allylphenyl]-maleamidsäure(n) umfaßt;
   - die dritte Stufe besteht darin, eine Cyclisierungsreaktion der vorerwähnten Maleamidsäuren durchzuführen, indem das vorerwähnte zweite Reaktionsmilieu mit einem Niedrigcarbonsäureanhydrid in Gegenwart eines tertiären Amins und gegebenenfalls eines Katalysators zur Reaktion gebracht wird, dann das Lösungsmittel der Reaktion entfernt wird,und sie führt zu einem rohen Reaktionsprodukt, das eine Verbindung ist, welche ein Gemisch umfaßt, gebildet aus: einem N-(Meth)Allyloxyphenylmaleimid, einem oder mehreren N-[(Meth)Allyloxy,(Meth)Allylphenyl]-maleimid (en) und gegebenenfalls einem oder mehreren N-[(Meth)Alloxy,Di-(meth)allylphenyl]-maleimiden.

3. Polymere gemäß einem der Ansprüche 1 bis 2, dadurch gekennzeichnet, daß sie sich in Form von gehärteten Polymeren befinden, die in den polaren, organischen Lösungsmitteln unlöslich sind, bestehend aus Dioxan, Tetrahydrofuran, Dibutylether, Dimethylformamid, Dimethylsulfoxid, N-Methylpyrrolidon, Dimethylacetamid, Methylglykol und Methylethylketon, und keine merkliche Erweichung unterhalb der Temperatur, bei der sie sich zu zersetzen beginnen, aufweisen.

4. Polymere gemäß einem der Ansprüche 1 bis 2, dadurch gekennzeichnet, daß sie sich in Form von wärmehärtbaren Präpolymeren (P) befinden, die in den vorstehend in Anspruch 4 definierten, polaren, organischen Lösungsmitteln löslich sind und einen Erweichungspunkt bei einer Temperatur unterhalb 200°C aufweisen.

5. Verfahren zur Herstellung der gehärteten Polymeren gemäß den Ansprüchen 1 bis 3, dadurch gekennzeichnet, daß man das Gemisch der Reaktanten direkt auf eine Temperatur zwischen 50° und 300°C erhitzt.

6. Herstellungsverfahren gemäß Anspruch 5, dadurch gekennzeichnet, daß es darin besteht, das Gemisch der Reaktanten zwischen 50°C und 180°C zu erhitzen, um zunächst ein Präpolymeres (P) zu bilden, dann das Härten des Präpolymeren (P) durch Erhitzen auf eine Temperatur zwischen 150°C und 300°C zu verursachen.

7. Verfahren zur Herstellung der wärmehärtbaren Präpolymeren (P) gemäß den Ansprüchen 1 bis 2 und

4, dadurch gekennzeichnet, daß man das Gemisch der Reaktanten direkt auf eine Temperatur zwischen 50° C und 180° C erhitzt, bis zur Erzielung eines flüssigen oder pastösen, homogenen Produkts.

8. Herstellungsverfahren gemäß Anspruch 6 oder 7, dadurch gekennzeichnet, daß es darin besteht, ausgehend von dem oder den Bis-imid(en) (a) und dem Reaktanten (c), ein Präpolymeres (PP) zu bilden, dann dieses Präpolymere (PP) mit dem Aminreagens (b) zu erhitzen, um das Präpolymere (P) zu erhalten.

9. Verfahren zur Herstellung der Polymeren gemäß Anspruch 6 oder 7, dadurch gekennzeichnet, daß es darin besteht, aus dem Aminreagens (b) und dem Reagens (c) ein Präpolymeres (P'P') zu bilden, dann dieses Präpolymere (P'P') mit dem oder den Bis-imid(en) (a) zu erhitzen, um das Präpolymere (P) zu erhalten.

10. Verwendung der Polymeren gemäß einem der Ansprüche 1 bis 4 zur Erzeugung von geformten Gegenständen, Überzügen, Erzeugnissen mit Zellstruktur und verstärkten und imprägnierten Verbundwerkstoffen.

**Pätentansprüche für folgenden Vertragsstaat : ES**

1. Verfahren zur Herstellung von Polymeren mit Imidgruppen, die sich in Form von gehärteten Polymeren befinden, die in den polaren, organischen Lösungsmitteln, bestehend aus Dioxan, Tetrahydrofuran, Dibutylether, Dimethylformamid, Dimethylsulfoxid, N-Methylpyrrolidon, Dimethylacetamid, Methylglykol und Methylethylketon, unlöslich sind und keine merkliche Erweichung unterhalb der Temperatur, bei der sie sich zu zersetzen beginnen, aufweisen,
dadurch **gekennzeichnet**, daß man direkt auf eine Temperatur zwischen 50° C und 300° C das Gemisch der folgenden Reaktanten erhitzt:
(a) ein N,N'-Bis-imid oder eine Assoziation mehrerer Bis-imide der Formel

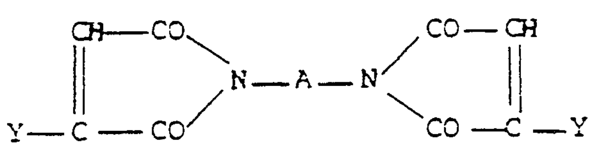

(I)

worin:
. das Symbol Y bedeutet H, $CH_3$ oder Cl
. das Symbol A bedeutet einen zweiwertigen Rest, ausgewählt aus der Gruppe, bestehend aus den Resten: Cyclohexylen; Phenylen; 4-Methyl-1,3-phenylen; 2-Methyl-1,3-phenylen; 5-Methyl-1,3-phenylen; 2,5-Diethyl-3-methyl-1,4-phenylen; und den Resten der Formel

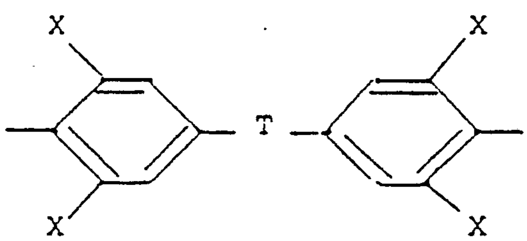

worin T eine einfache Valenzbindung oder eine Gruppe:

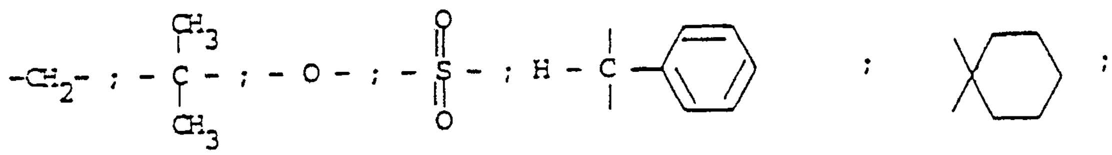

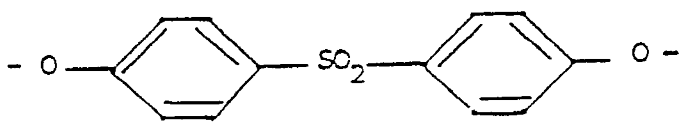

bedeutet und X ein Wasserstoffatom, einen Methyl-, Ethyl- oder Isopropylrest bedeutet;

(b) ein oder mehrere Alkenyloxyaniline der Formel

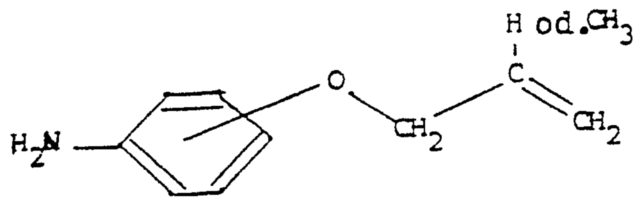

(II)

worin der Allyloxy- oder Methallyloxyrest in ortho-, meta- oder para-Stellung in bezug auf das Kohlenstoffatom des Benzolrings, das mit dem Stickstoff verbunden ist, steht;

und (c) ein copolymerisierbares Reagens, das eine Verbindung ist, umfassend:

- ein Gemisch eines Monomeren der Formel

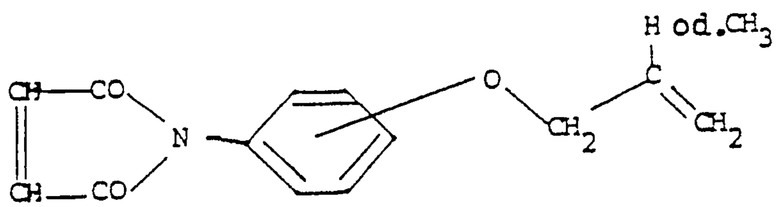

(III)

worin der Allyloxy- oder Methallyloxyest in ortho-, meta- oder para-Stellung in bezug auf das Kohlenstoffatom des Benzolringes, das an den Stickstoff gebunden ist, steht;

- mit:

. mindestens einem monosubstituierten Derivat der Formel

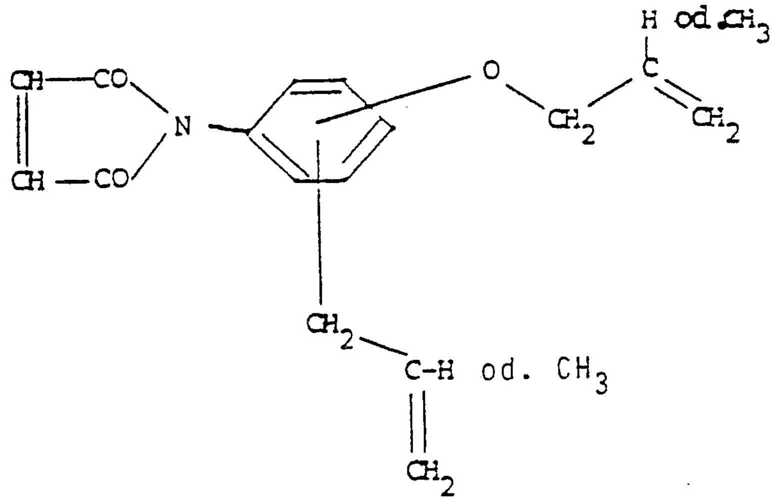

(IV)

. und gegebenenfalls einem oder mehreren disubstituierten Derivaten der Formel

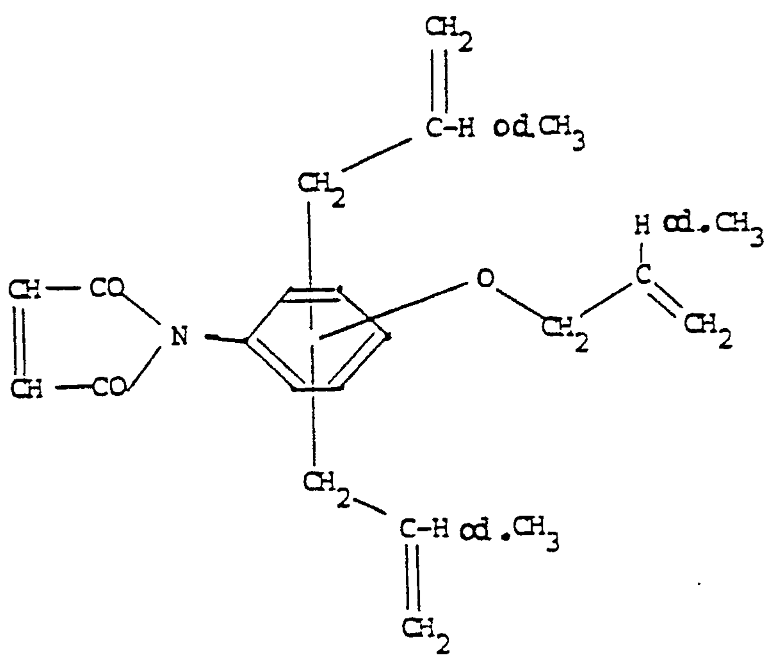

(V)

wobei in der vorerwähnten Verbindung, die als Reagens (c) dient, die Mengenverhältnisse der verschiedenen Bestandteile des Gemisches der Produkte der Formel (III), (IV) und gegebenenfalls (V) in den folgenden Grenzen gewählt sind (ausgedrückt als Gewichtsprozent jedes der Bestandteile in dem Gemisch):

- mindestens 30% und vorzugsweise von 50 bis 80% N-(Meth)-Allyloxyphenylmaleimid der Formel (III),
- von 5 bis 50% und vorzugsweise von 10 bis 35% an substituiertem(n) Mono-(meth)allyl-Derivat(en) der Formel (IV),
- und von 0 bis 20% und vorzugsweise von 0 bis 15% an substituiertem(n) Di-(meth)allyl-Derivat(en) der Formel (V),

wobei die Summe der Bestandteile in jedem Falle gleich 100 Gew.% ist,
und dieses Verfahren außerdem dadurch gekennzeichnet ist, daß einesteils die Mengen an N,N'-Bis-imid(en) (a), Aminoreagens (b) und copolymerisierbarem Reagens (c) derart gewählt sind, daß das Verhältnis r:

$$\frac{\text{Gesamtgewicht der Reaktanten mit Imidgruppen (a) + Reaktant (c)}}{\text{Gewicht des Reaktanten mit } NH_2\text{-Gruppen (b)}}$$

in dem Bereich von 0,5/1 bis 10/1 und vorzugsweise von 1/1 bis 5/1 liegt, und anderenteils das Gewicht des copolymerisierbaren Reaktanten (c) bis zu 40% des Gesamtgewichts der Reaktanten (a) + (b) + (c) darstellt und vorzugsweise in dem Bereich von 5 bis 30% liegt.

**2.** Verfahren gemäß Anspruch 1, dadurch gekennzeichnet, daß man als Verbindung, welche ein Gemisch von N-(Meth)Allyloxyphenylmaleimid der Formel (III) mit einem oder mehreren (Meth)Allyl-Substitutionsderivaten der Formel (IV) und gegebenenfalls (V) umfaßt, das Rohprodukt verwendet, das durch Anwendung des Verfahrens erhalten ist, welches darin besteht, die folgenden drei Stufen durchzuführen, die in dem gleichen Reaktor aneinandergereiht werden:

- die erste Stufe besteht darin, in einem Lösungsmittelmilieu ein Aminophenol mit Maleinsäureanhydrid reagieren zu lassen, indem bei einer Temperatur von 20 bis 200° C während einer Dauer je nach der gewählten Temperatur von 30 Minuten bis 2 Stunden gearbeitet wird, und dies führt zu einen ersten Reaktionsmilieu, das eine N-(Hydroxylphenyl)-maleamidsäure umfaßt;
- die zweite Stufe besteht darin, eine (Meth)Allylierungsreaktion der vorerwähnten Säure durchzuführen,indem man das vorerwähnte erste Reaktionsmilieu mit einem (Meth)Allylhalogenid umsetzt, wobei bei einem pH gearbeitet wird, das eingestellt wird und bei einem konstanten Wert zwischen 7 und 14 durch Zugabe einer bestimmten Menge einer wäßrigen, alkalischen Lösung und bei einer Temperatur von 40° C bis 150° C gehalten wird, und diese führt nach Ansäuern und Entfernung der wäßrigen Phase zu einem zweiten organischen Reaktionsmilieu, das eine N-[-(Meth)Allyloxyphenyl]-maleamidsäure, eine oder mehrere N-[(Meth)Allyloxy,(Meth)Allylphenyl]-maleamidsäure(n) und gegebenenfalls eine oder mehrere N-[(Meth)Allyloxy,Di-(meth)allylphenyl]-maleamidsäure(n) umfaßt;
- die dritte Stufe besteht darin, eine Cyclisierungsreaktion der vorerwähnten Maleamidsäuren durchzuführen, indem das vorerwähnte zweite Reaktionsmilieu mit einem Niedrigcarbonsäureanhydrid in Gegenwart eines tertiären Amins und gegebenenfalls eines Katalysators zur Reaktion gebracht wird, dann das Lösungsmittel der Reaktion entfernt wird,und sie führt zu einem rohen Reaktionsprodukt, das eine Verbindung ist, welche ein Gemisch umfaßt, gebildet aus einem N-(Meth)Allyloxyphenylmaleimid, einem oder mehreren N-[(Meth)Allyloxy,(Meth)Allylphenyl]-maleimid(en) und gegebenenfalls einem oder mehreren N-[(Meth)Allyloxy,Di-(meth)allylphenyl]-maleimid(en).

**3.** Verfahren zur Herstellung von Polymeren mit Imidgruppen, die in Form von wärmehärtbaren Präpolymeren (P) vorliegen, die in den vorstehend in Anspruch 1 definierten, organischen, polaren Lösungsmitteln löslich sind und einen Erweichungspunkt bei einer Temperatur unterhalb 200° C aufweisen, dadurch gekennzeichnet, daß man direkt das Gemisch der Reaktanten (a), (b) und (c), die vorstehend in den Ausprüchen 1 und 2 definiert sind, auf eine Temperatur zwischen 50° C und 180° C bis zur Erzielung eines flüssigen oder pastösen, homogenen Produkts erhitzt.

**4.** Verfahren gemäß Anspruch 1, dadurch gekennzeichnet , daß man das Gemisch der Reaktanten zwischen 50° C und 180° C erhitzt, um zunächst ein Präpolymeres (P) zu bilden, dann das Härten des Präpolymeren (P) durch Erhitzen auf eine Temperatur zwischen 150° C und 300° C zu bewirken.

**5.** Verfahren gemäß Anspruch 3 oder 4, dadurch gekennzeichnet, daß es darin besteht, aus dem oder den Bis-imid(en) (a) und dem Reaktanten (c) ein Präpolymeres (PP) zu bilden, dann dieses Präpolymere (PP) min dem Aminreagens (b) zu erhitzen, um das Präpolymere (P) zu erhalten.

**6.** Verfahren gemäß Anspruch 3 oder 4, dadurch gekennzeichnet, daß es darin besteht, aus dem Aminoreagens (b) und dem Reaktanten (c) ein Präpolymeres (P'P') zu bilden, dann dieses Präpolymere (P'P') mit dem oder den Bis-imid(en) (a) zu erhitzen, um das Präpolymere (P) zu erhalten.

**7.** Verwendung der Polymeren gemäß einem der Ansprüche 1 bis 6 zur Erzeugung von geformten Erzeugnissen, Überzügen, Erzeugnissen mit Zellstruktur und verstärkten und imprägnierten Verbund-

werkstoffen.